# EUROPÄISCHE PATENTSCHRIFT

(11) **EP 4 000 813 B1**
(45) Veröffentlichungstag und Bekanntmachung des Hinweises auf die Patenterteilung: **29.01.2025**
(21) Anmeldenummer: 21207499.1
(22) Anmeldetag: 10.11.2021
(51) Int. Cl.: B25H 3/04, B23Q 3/155, B23Q 7/14, B23Q 13/00

(54) **BESTÜCKUNGSVORRICHTUNG, BESTÜCKUNGSSYSTEM, TRANSPORTSYSTEM UND VERFAHREN ZU EINER BESTÜCKUNG EINER ANLAGE**
FEEDING DEVICE, FEEDING SYSTEM, TRANSPORT SYSTEM AND METHOD FOR FEEDING AN INSTALLATION
DISPOSITIF DE MONTAGE, SYSTÈME DE MONTAGE, SYSTÈME DE TRANSPORT ET PROCÉDÉ DE MONTAGE D'UNE INSTALLATION

(30) Priorität: 20.11.2020 DE 102020130799
(43) Veröffentlichungstag der Anmeldung: 25.05.2022
(73) Patentinhaber: E. Zoller GmbH & Co. KG Einstell- und Messgeräte, 74385 Pleidelsheim (DE)
(72) Erfinder: Pfau, Christian, 74379 Ingersheim (DE); Zoller, Alexander, 74385 Pleidelsheim (DE)
(74) Vertreter: Daub, Thomas

(56) Entgegenhaltungen:
- EP-A1- 3 520 956
- CN-U- 208 289 872
- DE-A1- 102011 054 890
- DE-A1- 102017 119 107
- DE-A1- 102018 109 744
- DE-U1- 202015 103 952
- JP-A- 2009 291 913
- US-A1- 2020 324 976

## Beschreibung

### Stand der Technik

Die Erfindung betrifft eine Bestückungsvorrichtung nach dem Anspruch 1, ein Bestückungssystem nach dem Anspruch 11, ein Transportsystem nach dem Anspruch 12 und ein Verfahren zu einer Bestückung einer Anlage nach dem Anspruch 13.

Es ist bereits eine Bestückungsvorrichtung für eine Bestückung einer Anlage mit Werkzeugaufnahmen und/oder mit Komplettwerkzeugen, mit einer fahrbaren Untergestelleinheit und mit einer auf der fahrbaren Untergestelleinheit angeordneten Aufbewahrungseinheit zu einer Lagerung der Werkzeugaufnahmen und/oder der Komplettwerkzeuge vorgeschlagen worden. Zum Beispiel offenbart die DE 20 2015 103952 U1 eine Bestückungsvorrichtung nach dem Oberbegriff des Anspruchs 1.

Die Aufgabe der Erfindung besteht insbesondere darin, eine gattungsgemäße Vorrichtung mit vorteilhaften Eigenschaften hinsichtlich einer Bereitstellung von Werkzeugaufnahmen und/oder Komplettwerkzeugen für eine durch einen Handhabungsroboter bediente Anlage bereitzustellen. Die Aufgabe wird erfindungsgemäß durch die Merkmale der Patentansprüche 1, 11, 12 und 13 gelöst, während vorteilhafte Ausgestaltungen und Weiterbildungen der Erfindung den Unteransprüchen entnommen werden können.

### Vorteile der Erfindung

Die Erfindung geht aus von einer Bestückungsvorrichtung für eine Bestückung einer, insbesondere zumindest einen, zumindest Werkzeuge, Werkzeugaufnahmen und/oder Komplettwerkzeuge handhabenden Handhabungsroboter umfassenden, Anlage, insbesondere einer Multispann- und Mess- und/oder Einstellstation für Werkzeuge und/oder Werkzeugaufnahmen und/oder einer Werkzeugmaschine, zumindest mit Werkzeugaufnahmen und/oder mit Komplettwerkzeugen, mit einer fahrbaren Untergestelleinheit und mit einer auf der fahrbaren Untergestelleinheit angeordneten Aufbewahrungseinheit zu einer Lagerung der Werkzeugaufnahmen und/oder der Komplettwerkzeuge.

Es wird vorgeschlagen, dass die Aufbewahrungseinheit zumindest eine Halteeinrichtung zumindest zu einer relativ zu einer Aufstellrichtung der Aufbewahrungseinheit, und insbesondere zu einer senkrecht zu der Aufstellrichtung verlaufenden Tiefenrichtung der Aufbewahrungseinheit, schräglagigen Halterung der Werkzeugaufnahmen und/oder der Komplettwerkzeuge umfasst. Dadurch kann insbesondere eine besonders vorteilhafte Bereitstellung der Werkzeugaufnahmen und/oder der Komplettwerkzeuge für die durch den Handhabungsroboter bediente Anlage erreicht werden. Insbesondere kann dadurch eine für eine Kinematik des Handhabungsroboters besonders vorteilhafte Bereitstellung der Werkzeugaufnahmen und/oder der Komplettwerkzeuge ermöglicht werden, insbesondere bei gleichzeitig vorteilhaft maximierter Kapazität der Aufbewahrungseinheit, insbesondere relativ zu oftmals durch Normen und/oder Sicherheitsvorgaben beschränkten und/oder vorgegebenen Außenmaßen, der Aufbewahrungseinheit. Zudem kann durch die vorgeschlagene Ausgestaltung der Aufbewahrungseinheit eine sichere, insbesondere verlustsichere, positionsfeste und/oder verletzungssichere Halterung der Werkzeugaufnahmen und/oder der Komplettwerkzeuge auch während einer Bewegung der fahrbaren Untergestelleinheit erreicht werden. Außerdem kann durch die vorgeschlagene Ausgestaltung der Aufbewahrungseinheit eine sichere, einfache und schnelle manuelle Beladung und/oder manuelle Entnahme der Werkzeugaufnahmen und/oder der Komplettwerkzeuge in/aus der Aufbewahrungseinheit erreicht werden.

Unter einer Bestückungsvorrichtung soll insbesondere eine Bereitstellungsvorrichtung zu einer Bereitstellung einer Mehrzahl an Werkzeugaufnahmen und/oder an Komplettwerkzeugen für eine Entnahme durch den automatisierten Handhabungsroboter verstanden werden. Insbesondere ist die Bestückungsvorrichtung als eine mobile Bestückungsvorrichtung ausgebildet. Unter einem "Handhabungsroboter" soll insbesondere ein Industrieroboter, vorzugsweise ein Gelenkarmroboter, insbesondere mit zumindest drei, vorzugsweise zumindest vier, bevorzugt zumindest fünf und besonders bevorzugt zumindest sechs unabhängig voneinander beweglichen Robotergelenken, eine Handhabungseinrichtung und/oder ein Manipulator verstanden werden. Insbesondere ist der Handhabungsroboter zumindest dazu vorgesehen, einen Materialfluss von und/oder zu der Halteeinrichtung der Bestückungsvorrichtung zu bewältigen. Insbesondere ist der Handhabungsroboter zumindest dazu vorgesehen, einen Materialfluss von und/oder zu zumindest einer Wirkstelle der Anlage zu bewältigen. Eine Wirkstelle kann insbesondere zumindest ein Teil eines Bauteils und/oder einer Komponente der Anlage, welche zumindest dazu vorgesehen ist, einen funktionalen Arbeitsschritt durchzuführen, sein. Insbesondere umfasst der Handhabungsroboter zumindest eine Greifereinheit, welche zumindest dazu vorgesehen ist, ein Werkzeug, eine Werkzeugaufnahme und/oder ein Komplettwerkzeug zu greifen. Vorzugsweise weist der Handhabungsroboter zumindest eine Robotersteuereinheit auf. Die Robotersteuereinheit weist insbesondere eine speziell programmierte Robotersteuereinrichtung auf, welche dazu vorgesehen ist, Aktionen und/oder Bewegungen des Roboters und/oder zumindest einer Teilkomponente des Handhabungsroboters zu steuern, zu regeln und/oder auszuwählen. Vorzugsweise weist die Robotersteuereinheit zumindest eine Bedienerschnittstelle auf, insbesondere zu einer Beeinflussung einer Bewegung zumindest einer Teilkomponente des Roboters und/oder einer Beeinflussung der Programmierung der Robotersteuereinrichtung. Vorzugsweise weist der Handhabungsroboter zumindest eine Sensoreinheit zu einer Bestimmung zumindest eines Umgebungsparameters auf. Die Sensoreinheit kann insbesondere zumindest einen Kraft- und/oder Momentsensor, zumindest einen Sensor für elektromagnetische Wellen, zumindest einen Schallsensor, zumindest einen Drucksensor, zumindest einen Vibrationssensor, zumindest einen Gyrosensor, zumindest einen Feuchtigkeitssensor und/oder zumindest einen Temperatursensor aufweisen. Insbesondere ist der Handhabungsroboter dazu vorgesehen, bei der Handhabung der Werkzeuge, der Werkzeugaufnahmen und/oder der Werkzeugeinheiten zumindest einmal umzugreifen, beispielsweise zwischen einer Halterung einer Werkzeugaufnahme an einer Unterseite (Schaft) der Werkzeugaufnahme und einer Halterung der Werkzeugaufnahme an entlang eines Umfangs der Werkzeugaufnahme angeordneten Greiferrillen der Werkzeugaufnahme.

Unter einer "Anlage" soll insbesondere eine technische Anlage und/oder eine Maschinen-Anlage verstanden werden. Insbesondere stellt die Anlage, vorzugsweise die technische Anlage, eine planvolle und/oder systematische Zusammenstellung von in räumlichem Zusammenhang stehenden Apparaten, Geräten und/oder Maschinen, die funktional, steuerungstechnisch und/oder sicherheitstechnisch miteinander verbunden sind, dar. Bevorzugt ist die Anlage als eine Multispann- und Mess- und/oder Einstellstation, wie sie in der deutschen Patentanmeldung mit der Anmeldenummer 10 2019 115 607.6 beschrieben ist, oder als eine Werkzeugmaschine ausgebildet. Unter einer "Multispann- und Mess- und/oder Einstellstation" soll insbesondere eine Vorrichtung verstanden werden, welche zumindest dazu vorgesehen ist, eine Mehrzahl gleicher und/oder vorzugsweise unterschiedlicher Werkzeugaufnahmen, insbesondere zumindest teilweise gleichzeitig, mit Werkzeugen zu bestücken oder Werkzeuge aus einer Mehrzahl gleicher und/oder vorzugsweise unterschiedlicher Werkzeugaufnahmen, insbesondere zumindest teilweise gleichzeitig, zu entnehmen. Insbesondere ist die Multispann- und Mess- und/oder Einstellstation zumindest dazu vorgesehen, zumindest teilweise gleichzeitig ein Werkzeug aus einer Werkzeugaufnahme zu entnehmen und ein anderes Werkzeug in einer anderen Werkzeugaufnahme zu befestigen. Insbesondere ist die Multispann- und Mess- und/oder Einstellstation zumindest dazu vorgesehen, zumindest teilweise gleichzeitig ein Werkzeug aus einer Werkzeugaufnahme zu entnehmen oder ein Werkzeug in einer Werkzeugaufnahme zu befestigen und ein anderes Werkzeug in einer anderen Werkzeugaufnahme zu vermessen und/oder einzustellen. Insbesondere weist die Anlage den Handhabungsroboter auf. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Unter einer "Werkzeugaufnahme" soll insbesondere ein Bauteil verstanden werden, welches zu einer Aufnahme eines Werkzeugs und einer Verbindung des Werkzeugs mit einer Maschine vorgesehen ist. Insbesondere ist die Werkzeugaufnahme als eine Schnittstelle zwischen Werkzeug und Maschine ausgebildet. Vorzugsweise ist die Werkzeugaufnahme als ein Werkzeugfutter, beispielsweise als ein Schrumpfspannfutter, als ein Hydrodehnfutter, als ein Pressspannfutter, als ein Spannzangenfutter oder dergleichen, ausgebildet. Die Werkzeuge sind als Zerspanungswerkzeuge zum Einsatz auf CNC-Maschinen ausgebildet. Beispielsweise können die Werkzeuge als Schaftwerkzeuge, vorzugsweise als Rotations-Schaftwerkzeuge, beispielsweise Bohrer, Fräser, Profilwerkzeuge und/oder Reibahlen ausgebildet sein, wobei vorzugsweise ein Schaft der Schaftwerkzeuge zu einer Montage in einer Werkzeugaufnahme vorgesehen ist. Unter einem Komplettwerkzeug soll eine fixe Kombination aus Werkzeug und Werkzeugaufnahme verstanden werden.

Die fahrbare Untergestelleinheit umfasst insbesondere einen Rahmen zur Aufnahme eines Gewichts einer gefüllten Aufbewahrungseinheit. Die fahrbare Untergestelleinheit umfasst insbesondere mehrere, vorzugsweise vier, Rollen. Insbesondere sind die Rollen unangetrieben. Alternativ ist jedoch auch denkbar, dass die Bestückungsvorrichtung eine integrierte Antriebseinheit zum Antrieb einer oder mehrerer Rollen der fahrbaren Untergestelleinheit aufweist. Die Aufbewahrungseinheit ist insbesondere rundum (von allen Seiten) verschließbar. Die Aufbewahrungseinheit ist insbesondere dazu vorgesehen, einen Zugriff auf in der Aufbewahrungseinheit angeordnete Objekte zu unterbinden. Dadurch kann vorteilhaft, insbesondere bei einem Transport von scharfkantigen oder scharfschneidigen Werkzeugen, verhindert werden, dass es zu Verletzungen durch einen unbeabsichtigten Kontakt mit den Werkzeugen kommen kann. Insbesondere ist die Kombination aus der Aufbewahrungseinheit und der fahrbaren Untergestelleinheit zumindest hinsichtlich einer manuellen Fahrbarkeit, zumindest hinsichtlich einer Kippsicherheit und/oder zumindest hinsichtlich einer verfügbaren Kapazität für Werkzeugaufnahmen, Komplettwerkzeuge und/oder Werkzeuge branchenüblicher Größen und/oder Formate optimiert.

Die Halteeinrichtung ist zu einer positionsfesten, vorzugsweise kipp- und/oder rutschsicheren, Halterung der Werkzeugaufnahmen und/oder der Komplettwerkzeuge innerhalb der, vorzugsweise rundum verschließbaren, Aufbewahrungseinheit vorgesehen. Insbesondere weist die Halteeinrichtung zumindest einen Halteplatz, vorzugsweise eine Mehrzahl an Halteplätzen, für die Aufnahme von jeweils einer Werkzeugaufnahme oder jeweils eines Komplettwerkzeugs auf. Vorzugsweise sind mehrere Halteplätze in der Halteeinrichtung in einer Reihe entlang einer Geraden nebeneinander angeordnet. Vorzugsweise sind mehrere Reihen von Halteplätzen in der Halteeinrichtung übereinander angeordnet. Insbesondere sind die Halteplätze der übereinander angeordneten Reihen von Halteplätzen direkt übereinander angeordnet oder vertikal (regelmäßig oder unregelmäßig) versetzt zueinander angeordnet. Insbesondere ist die Halteeinrichtung als eine Art Rechen ausgebildet, wobei jeweils zwischen zwei benachbarten Zinken des Rechens ein Halteplatz ausgebildet ist. Insbesondere sind jeweils einen Halteplatz begrenzende Seitenbereiche eines Zinkens dazu vorgesehen, in eine dafür vorgesehene Nut der Werkzeugaufnahme oder des Komplettwerkzeugs, z.B. in eine Greiferrille der Werkzeugaufnahme oder des Komplettwerkzeugs, einzugreifen. Insbesondere kontaktiert die Halteeinrichtung die Werkzeugaufnahme oder das Komplettwerkzeug lediglich an einer Stelle entlang einer Längserstreckung der Werkzeugaufnahme oder des Komplettwerkzeugs. Alternativ ist jedoch auch denkbar, dass die Halteeinrichtung zwei oder mehr Auflageflächen entlang der Längserstreckung der Werkzeugaufnahme oder des Komplettwerkzeugs ausbildet. Beispielsweise werden die Werkzeugaufnahmen oder Komplettwerkzeuge in diesem Fall oberhalb und unterhalb eines Greiferbunds der jeweiligen Werkzeugaufnahmen oder des jeweiligen Komplettwerkzeugs durch die Halteeinrichtung kontaktiert und gehaltert.

Unter einer schräglagigen Halterung einer Werkzeugaufnahme oder eines Komplettwerkzeugs soll eine Halterung der Werkzeugaufnahme oder des Komplettwerkzeugs verstanden werden, in welcher die Werkzeugaufnahme oder das Komplettwerkzeug, vorzugsweise eine für einen Regeleinsatz der Werkzeugaufnahme oder des Komplettwerkzeugs vorgesehene Rotationsachse der Werkzeugaufnahme oder des Komplettwerkzeugs, verschieden von einer zu der vertikalen Aufstellrichtung der Aufbewahrungseinheit, parallelen Ausrichtung und verschieden von einer zu de vertikalen Aufstellrichtung der Aufbewahrungseinheit, senkrechten Ausrichtung, positioniert und gehaltert ist. Insbesondere ist ein Haltewinkel der schräglagig gehalterten Werkzeugaufnahme oder des schräglagig gehalterten Komplettwerkzeugs, insbesondere ein Winkel der für den Regeleinsatz der Werkzeugaufnahme oder des Komplettwerkzeugs vorgesehenen Rotationsachse der Werkzeugaufnahme oder des Komplettwerkzeugs, zu der vertikalen Aufstellrichtung der Aufbewahrungseinheit, verschieden von (etwa) 0°. Insbesondere ist der Haltewinkel der schräglagig gehalterten Werkzeugaufnahme oder des schräglagig gehalterten Komplettwerkzeugs, insbesondere der Winkel der für den Regeleinsatz der Werkzeugaufnahme oder des Komplettwerkzeugs vorgesehenen Rotationsachse der Werkzeugaufnahme oder des Komplettwerkzeugs, zu der vertikalen Aufstellrichtung der Aufbewahrungseinheit, verschieden von (etwa) 90°. Insbesondere beträgt der Haltewinkel der schräglagig gehalterten Werkzeugaufnahme oder des schräglagig gehalterten Komplettwerkzeugs, insbesondere der Winkel der für den Regeleinsatz der Werkzeugaufnahme oder des Komplettwerkzeugs vorgesehenen Rotationsachse der Werkzeugaufnahme oder des Komplettwerkzeugs, zu der vertkalen Aufstellrichtung der Aufbewahrungseinheit, wenigstens 5°, vorzugsweise wenigstens 10° und bevorzugt wenigstens 15°. Insbesondere beträgt der Haltewinkel der schräglagig gehalterten Werkzeugaufnahme oder des schräglagig gehalterten Komplettwerkzeugs, insbesondere der Winkel der für den Regeleinsatz der Werkzeugaufnahme oder des Komplettwerkzeugs vorgesehenen Rotationsachse der Werkzeugaufnahme oder des Komplettwerkzeugs, zu der vertikalen Aufstellrichtung der Aufbewahrungseinheit, höchstens 80°, vorzugsweise höchstens 75°, vorteilhaft höchstens 50°, bevorzugt höchstens 30° und besonders bevorzugt höchstens 20°. Besonders bevorzugt liegt der Haltewinkel der schräglagig gehalterten Werkzeugaufnahme oder des schräglagig gehalterten Komplettwerkzeugs, insbesondere der Winkel der für den Regeleinsatz der Werkzeugaufnahme oder des Komplettwerkzeugs vorgesehenen Rotationsachse der Werkzeugaufnahme oder des Komplettwerkzeugs, zu der vertikalen Aufstellrichtung der Aufbewahrungseinheit, in einem Bereich zwischen etwa 10° und 20° (z.B. bei 15°). Ferner wird vorgeschlagen, dass die Halteeinrichtung zumindest einen Halteplatz umfasst, welcher derart ausgebildet ist, dass eine Unterseite einer, insbesondere ordnungsgemäß, in die Halteeinrichtung eingelegten Werkzeugaufnahme und/oder eines, insbesondere ordnungsgemäß, in die Halteeinrichtung eingelegten Komplettwerkzeugs, zumindest teilweise in Richtung einer zumindest teilweise seitlich an der Aufbewahrungseinheit angeordneten Be- und/oder Entladeöffnung zeigt. Dadurch kann insbesondere eine besonders vorteilhafte Bereitstellung der Werkzeugaufnahmen und/oder der Komplettwerkzeuge für die durch den Handhabungsroboter bediente Anlage erreicht werden. Insbesondere kann dadurch eine für eine Kinematik des Handhabungsroboters besonders vorteilhafte Bereitstellung der Werkzeugaufnahmen und/oder der Komplettwerkzeuge ermöglicht werden, insbesondere bei gleichzeitig vorteilhaft maximierter Kapazität der Aufbewahrungseinheit, insbesondere relativ zu oftmals durch Normen und/oder Sicherheitsvorgaben beschränkten und/oder vorgegebenen Außenmaßen, der Aufbewahrungseinheit. Vorzugsweise sind mehrere, bevorzugt alle, Halteplätze der Halteeinrichtung wie oben beschrieben ausgebildet. Vorzugsweise sind mehrere, bevorzugt alle, Halteplätze der Halteeinrichtung zumindest im Wesentlichen identisch ausgerichtet. Vorzugsweise sind mehrere, bevorzugt alle, Halteplätze der Halteeinrichtung zumindest im Wesentlichen identisch ausgebildet. Unter "im Wesentlichen identisch" soll insbesondere im Rahmen von Fertigungs- und/oder Spieltoleranzen identisch verstanden werden. Eine Unterseite der Werkzeugaufnahme oder des Komplettwerkzeugs ist als die Seite der Werkzeugaufnahme oder des Komplettwerkzeugs ausgebildet, welche dazu vorgesehen ist, mit einer Werkzeugmaschine verbunden zu werden. Vorzugsweise ist die Unterseite der Werkzeugaufnahme oder des Komplettwerkzeugs entlang der Rotationsachse gegenüberliegend zu einem Bearbeitungsbereich des Komplettwerkzeugs oder zu einem Aufnahmebereich der Werkzeugaufnahme angeordnet. Unter der Wendung "ordnungsgemäß eingelegt" soll insbesondere bestimmungsgemäß eingelegt verstanden werden. Insbesondere ist die Werkzeugaufnahme oder das Komplettwerkzeug nur auf eine einzige Weise ordnungsgemäß in den Halteplatz einlegbar.

Insbesondere bildet die Be- und/oder Entladeöffnung eine Schleusenöffnung der Aufbewahrungseinheit aus. Insbesondere erstreckt sich die Seite der Aufbewahrungseinheit mit der Be- und/oder Entladeöffnung parallel zu der Vertikalrichtung. Insbesondere erstreckt sich die Be- und/oder Entladeöffnung der Aufbewahrungseinheit über einen Großteil der Seite der Aufbewahrungseinheit. Insbesondere erstreckt sich die Be- und/oder Entladeöffnung zumindest teilweise über eine Oberseite der Aufbewahrungseinheit. Insbesondere steht eine Horizontalkomponente einer, einer orthogonalen Vektorzerlegung unterworfenen gedachten Verlängerung der vorgesehenen Rotationsachse einer/s in die Halteeinrichtung eingelegten Werkzeugaufnahme oder Komplettwerkzeugs zumindest in einer Horizontalebene zumindest im Wesentlichen senkrecht auf eine Öffnungsebene der Be- und/oder Entladeöffnung und/oder auf eine parallel zu der Seite mit der Be- und/oder Entladeöffnung verlaufende Seitenebene der Aufbewahrungseinheit. Insbesondere ist die Horizontalkomponente der, der orthogonalen Vektorzerlegung unterworfenen gedachten Verlängerung der vorgesehenen Rotationsachse der/des in die Halteeinrichtung eingelegten Werkzeugaufnahme oder Komplettwerkzeugs zumindest in einer Horizontalebene frei von einem Schnittpunkt mit einer (Endlos-)Ebene, innerhalb welcher eine seitliche Begrenzung der Aufbewahrungseinheit verläuft, die die Aufbewahrungseinheit in einer von der Be- und/oder Entladeöffnung aus gesehenen Breitenrichtung begrenzt. Insbesondere weist die Aufbewahrungseinheit ein Verschlusselement auf, welches vorzugsweise dazu vorgesehen ist, die Be- und/oder Entladeöffnung, vorzugsweise vollständig, zu verschließen. Insbesondere ist das Verschlusselement als eine vertikale Schiebetür, bevorzugt als eine Art Rollo, ausgebildet, welcher vorzugsweise in Vertikalrichtung nach oben oder in Vertikalrichtung nach unten öffenbar ist. Insbesondere schneidet die gedachte Verlängerung der vorgesehenen Rotationsachse der/des in die Halteeinrichtung eingelegten Werkzeugaufnahme oder Komplettwerkzeugs das Verschlusselement in einem spitzen Winkel zur Vertikalrichtung oder in einem stumpfen Winkel zur Vertikalrichtung, vorzugsweise in einem dem Haltewinkel entsprechenden Winkel.

Zudem wird vorgeschlagen, dass der Halteplatz derart ausgebildet ist, dass die Unterseite der in die Halteeinrichtung eingelegten Werkzeugaufnahme und/oder des in die Halteeinrichtung eingelegten Komplettwerkzeugs, zumindest teilweise nach unten, insbesondere zumindest teilweise in Vertikalrichtung gesehen nach unten, zeigt. Insbesondere ist der Halteplatz derart ausgebildet, dass die Unterseite der in die Halteeinrichtung eingelegten Werkzeugaufnahme und/oder des in die Halteeinrichtung eingelegten Komplettwerkzeugs schräg nach unten, insbesondere in dem Haltewinkel schräg nach unten, zeigt.

Außerdem wird vorgeschlagen, dass die Halteeinrichtung eine Mehrzahl an zumindest im Wesentlichen identisch zueinander ausgebildeten Halteplätzen aufweist, welche zumindest im Wesentlichen horizontal nebeneinander und zumindest im Wesentlichen vertikal (direkt oder versetzt) übereinander angeordnet sind. Dadurch kann insbesondere eine besonders vorteilhafte Bereitstellung der Werkzeugaufnahmen und/oder der Komplettwerkzeuge für die durch den Handhabungsroboter bediente Anlage erreicht werden. Insbesondere kann dadurch eine für eine Kinematik des Handhabungsroboters besonders vorteilhafte Bereitstellung der Werkzeugaufnahmen und/oder der Komplettwerkzeuge ermöglicht werden, insbesondere bei gleichzeitig vorteilhaft maximierter Kapazität der Aufbewahrungseinheit. Insbesondere sind die Halteplätze im Wesentlichen identisch ausgerichtet. Insbesondere sind die Halteeinrichtungen aus der Aufbewahrungseinheit entnehmbar / austauschbar. Insbesondere sind die Halteeinrichtungen in der Höhe verstellbar / in verschiedenen Höhen in der Aufbewahrungseinheit positionierbar.

Zusätzlich wird vorgeschlagen, dass die Aufbewahrungseinheit zumindest eine weitere Halteeinrichtung zumindest zu einer aufrechten Halterung von, insbesondere mit den in der Halteeinrichtung gehalterten Werkzeugaufnahmen kombinierbaren, Werkzeugen umfasst. Dadurch kann insbesondere zusätzlich zu einer besonders vorteilhaften Bereitstellung der Werkzeugaufnahmen für die durch den Handhabungsroboter bediente Anlage auch eine gleichzeitige, insbesondere für eine Kinematik des Handhabungsroboters besonders vorteilhafte, Bereitstellung der Werkzeuge erreicht werden. Unter einer "aufrechten Halterung" soll insbesondere eine Halterung der Werkzeuge verstanden werden, bei welcher eine vorgesehene Rotationsachse der Werkzeuge, insbesondere eine Werkzeugrotationsachse, zumindest im Wesentlichen parallel zu der vertikalen

Aufstellrichtung der Aufbewahrungseinheit, ausgerichtet ist. Insbesondere zeigt bei der aufrechten Halterung ein Werkzeugschaft des Werkzeugs in der Vertikalrichtung nach unten.

Wenn die weitere Halteeinrichtung zumindest einen Halteplatz, vorzugsweise eine Mehrzahl an Halteplätzen, umfasst, welcher in der Aufstellrichtung oberhalb des Halteplatzes der Halteeinrichtung, insbesondere oberhalb der Mehrzahl an identisch zueinander ausgebildeten und ausgerichteten Halteplätzen der Halteeinrichtung, angeordnet ist, kann eine besonders vorteilhafte Kombination aus effektiver Platznutzung und Anpassung an eine Kinematik eines Handhabungsroboters, welcher dazu vorgesehen ist, die Werkzeugaufnahmen und die Werkzeuge in die Aufbewahrungseinheit einzulegen und aus der Aufbewahrungseinheit zu entnehmen, erreicht werden. Insbesondere kann bei der beschriebenen Anordnung der weiteren Halteeinrichtung vorteilhaft eine Be- und/oder Entladung der weiteren Halteeinrichtung zumindest teilweise über den sich auf die Oberseite der Aufbewahrungseinheit erstreckenden Teil der Be- und/oder Entladeöffnung erfolgen. Insbesondere sind die Halteplätze der weiteren Halteeinrichtung in einer oder mehreren, vorzugsweise zu den Reihen von Halteplätzen der Halteeinrichtung zumindest im Wesentlichen parallelen, Reihen angeordnet. Es ist denkbar, dass die weitere Halteeinrichtung mehrere, insbesondere in einer Tiefenrichtung der Aufbewahrungseinheit hintereinander angeordneten Reihen von Halteplätzen umfasst. Insbesondere sind die weiteren Halteeinrichtungen aus der Aufbewahrungseinheit entnehmbar / austauschbar. Insbesondere sind die weiteren Halteeinrichtungen in der Höhe verstellbar / in verschiedenen Höhen in der Aufbewahrungseinheit positionierbar. Dadurch kann vorteilhaft eine Anordnung der Halteeinrichtungen und der weiteren Halteeinrichtungen flexibel an unterschiedliche zu erwartende Werkzeuggrößen und/oder Werkzeugaufnahmegrößen angepasst werden.

Wenn zudem der zumindest eine Halteplatz der weiteren Halteeinrichtung, vorzugsweise alle Halteplätze der weiteren Halteeinrichtung, eine universell bestückbare Werkzeug-Schnapphalterung aufweist, kann vorteilhaft eine besonders hohe Einsatzflexibilität erreicht werden. Vorteilhaft kann ohne großen Umbauaufwand bzw. ohne großen Konfektionierungsaufwand eine hohe Zahl an unterschiedlichen Werkzeugen in die Aufbewahrungseinheit aufgenommen werden. Insbesondere ist eine universell bestückbare Werkzeug-Schnapphalterung mit verschiedenen Werkzeugen, die verschiedene Schaftdurchmesser aufweisen, bestückbar. Insbesondere weist die Werkzeug-Schnapphalterung einen Spannmechanismus auf, welcher dazu vorgesehen ist, den Werkzeugschaft eines Werkzeugs in einem durch den Halteplatz der weiteren Halteeinrichtung gebildeten Aufnahmebereich variierbarer Größe von zumindest zwei Seiten zu klemmen und dadurch zu haltern.

Wenn außerdem die Werkzeug-Schnapphalterung einen Spannmechanismus zu einer Fixierung des Werkzeugs in dem Halteplatz der weiteren Halteeinrichtung aufweist, welcher durch eine Bewegung eines Roboterarms eines Handhabungsroboters entlang einer Bewegungsbahn bedienbar ist, kann vorteilhaft eine automatisierte Bestückung und/oder Entnahme der universell bestückbaren weiteren Halteeinrichtung und somit eine besonders gute Anpassung an eine Kinematik des Handhabungsroboters erreicht werden. Vorteilhaft kann dadurch eine besonders einfache und sichere Bedienung der Bestückungsvorrichtung ermöglicht werden. Insbesondere ist der Handhabungsroboter dazu vorgesehen, den Spannmechanismus zu spannen, das Werkzeug in den universell bestückbaren Halteplatz einzusetzen und danach den Spannmechanismus wieder freizugeben. Insbesondere kann der Spannmechanismus dazu ein Angriffselement aufweisen, welches der Handhabungsroboter bei dem Einsetzen oder Entnehmen des Werkzeugs direkt bedient oder alternativ ist der Spannmechanismus frei von einem Angriffselement zu einer direkten Bedienung des Spannmechanismus und, wobei in diesem Fall der Handhabungsroboter vorzugsweise dazu vorgesehen ist, den Spannmechanismus durch eine Bewegung des Werkzeugs indirekt zu bedienen, z.B. mittels eines Anschlags des Werkzeugschafts an einem Teil des Spannmechanismus. Vorzugsweise ist der Handhabungsroboter dazu vorgesehen, einen Schnapper des Spannmechanismus der Werkzeug-Schnapphalterung mittels des Werkzeugschafts aufzuschieben (und dabei zu spannen), so dass ein Loslassen des Werkzeugs automatisch zu einem eine Halterung erzeugenden Zuschnappen führt.

Zudem wird vorgeschlagen, dass die Aufbewahrungseinheit zusätzlich zu einer primären Be- und/oder Entladeöffnung zumindest eine manuell öffen- und schließbare sekundäre Be- und/oder Entladeöffnung aufweist. Dadurch kann vorteilhaft eine hohe Ausfallsicherheit und/oder eine einfache Wartungs- und/oder Fehlerbehebungsmöglichkeit erreicht werden. Insbesondere ist die primäre Be- und/oder Entladeöffnung als eine Schleusenöffnung ausgebildet. Insbesondere ist die primäre Be- und/oder Entladeöffnung die zuvor bereits beschriebene Be- und/oder Entladeöffnung. Insbesondere ist die sekundäre Be- und/oder Entladeöffnung als eine Wartungs- und/oder Störfallöffnung ausgebildet. Insbesondere ist die sekundäre Be- und/oder Entladeöffnung ausschließlich für Stör- und/oder Wartungsfälle vorgesehen. Die sekundäre Be- und/oder Entladeöffnung ist vorzugsweise auf einer zu der primären Be- und/oder Entladeöffnung gegenüberliegenden Seite der Aufbewahrungseinheit angeordnet. Vorzugsweise ist die primäre Be- und/oder Entladeöffnung und/oder die sekundäre Be- und/oder Entladeöffnung zumindest teilweise aus einem transparenten Material ausgebildet. Insbesondere ist die sekundäre Be- und/oder Entladeöffnung als eine Klappe, insbesondere als eine Tür, ausgebildet.

Weiterhin wird vorgeschlagen, dass die fahrbare Untergestelleinheit eine Kopplungseinrichtung zu einer Kopplung mit einer angetriebenen, vorzugsweise autonom fahrenden, Transporteinrichtung aufweist. Dadurch kann insbesondere eine besonders vorteilhafte Bereitstellung der Werkzeugaufnahmen und/oder der Komplettwerkzeuge für die durch den Handhabungsroboter bediente Anlage erreicht werden. Vorteilhaft kann eine hohe Effizienz und/oder eine hohe Bedienersicherheit erreicht werden.

Wenn relativ zu der Aufstellrichtung gesehen, zumindest ein Großteil der Kopplungseinrichtung auf einer Unterseite der fahrbaren Untergestelleinheit angeordnet ist, kann eine besonders einfache und/oder vorteilhafte Kopplung der Bestückungsvorrichtung mit der Transporteinrichtung erreicht werden. Insbesondere umfasst die Kopplungseinrichtung eine Öffnung, in die die auf einem Boden fahrende, insbesondere autonome, Transporteinrichtung hineinfahren kann. Insbesondere ist die Öffnung zwischen (zweimal) zwei auf gegenüberliegenden Seiten der fahrbaren Untergestelleinheit angeordneten Rädern ausgebildet. Insbesondere umfasst die Kopplungseinrichtung eine auf einer Unterseite der fahrbaren Untergestelleinheit angeordnete Fläche zur Kontaktierung der Transporteinrichtung. Insbesondere ist denkbar, dass die Transporteinrichtung die gesamte fahrbare Untergestelleinheit anhebt und somit das gesamte Gewicht der Bestückungsvorrichtung vollständig durch die Räder der Transporteinrichtung abgestützt ist oder dass die Transporteinrichtung lediglich derart mit der fahrbaren Untergestelleinheit koppelt, dass dieses die weiterhin auf eigenen Rädern stehende fahrbare Untergestelleinheit schiebt und/oder zieht. Insbesondere ist denkbar, dass die Transporteinrichtung über eine magnetische Kopplung oder über eine mechanische Kopplung (Anschläge, Greifer, Rastverbindungen, etc.) mit der Unterseite der fahrbaren Untergestelleinheit gekoppelt ist.

Ferner wird ein Bestückungssystem mit der Bestückungsvorrichtung und mit zumindest einer in der Bestückungsvorrichtung angeordneten Werkzeugaufnahme, mit zumindest einem in der Bestückungsvorrichtung angeordneten Komplettwerkzeug und/oder mit zumindest einem in der Bestückungsvorrichtung angeordneten Werkzeug, sowie ein Transportsystem mit der Bestückungsvorrichtung oder mit dem Bestückungssystem und mit einem mit der Bestückungsvorrichtung betriebsmäßig koppelbaren und von der Bestückungsvorrichtung betriebsmäßig trennbaren autonomen oder ferngesteuerten Transporteinrichtung vorgeschlagen. Dadurch können vorteilhafte Anlagen-Bestückungseigenschaften und/oder vorteilhafte Transporteigenschaften für Werkzeugaufnahmen, Werkzeuge und/oder Komplettwerkzeuge erreicht werden. Unter der Wendung "betriebsmäßig" soll insbesondere während eines regulären Betriebs verstanden werden.

Ferner wird ein Verfahren zu einer Bestückung einer Anlage, insbesondere der Multispann- und Mess- und/oder Einstellstation und/oder der Werkzeugmaschine, mittels der Bestückungsvorrichtung vorgeschlagen, wobei in zumindest einem Andockschritt eine Verbindung zwischen Schnittstellen der Bestückungsvorrichtung und der Anlage hergestellt wird und dass in einem auf den Andockschritt folgenden Öffnungsschritt eine Öffnung einer die Be- und/oder Entladeöffnung der Bestückungsvorrichtung verschließenden Verschlusseinheit, insbesondere der die Verschlusseinheit öffnenden oder schließenden Antriebseinheit, über die verbundene Schnittstelle gesteuert wird und/oder über die verbundene Schnittstelle mit Antriebsenergie versorgt wird. Dadurch kann vorteilhaft eine hohe Betriebssicherheit und/oder eine hohe Bedienersicherheit erreicht werden.

Zudem wird vorgeschlagen, dass in zumindest einem vor einer ersten Entnahme einer Werkzeugaufnahme aus der Bestückungsvorrichtung durchgeführten Erkennungsschritt von einem Sensor der Anlage alle in der Bestückungsvorrichtung angeordneten Werkzeugaufnahmen identifiziert werden und vorzugsweise deren Position registriert wird. Dadurch kann vorteilhaft eine hohe Automatisierung erreicht werden und/oder ein Fehlbetrieb ausgeschlossen werden. Insbesondere kann der Sensor der Anlage als eine Kamera, welche eine automatische Erkennung von Werkzeugaufnahmen, Werkzeugen und/oder Komplettwerkzeugen, entweder anhand deren Gestalt oder anhand von den Werkzeugaufnahmen, Werkzeugen und/oder Komplettwerkzeugen zugeordneten Identifikationselementen durchführt, als ein RFID-Reader, welcher den Werkzeugaufnahmen, Werkzeugen und/oder Komplettwerkzeugen zugeordnete RFID-Chips ausliest, als ein Barcodescanner, welcher den Werkzeugaufnahmen, Werkzeugen und/oder Komplettwerkzeugen zugeordnete Barcodes oder QR-Codes, etc. ausliest oder dergleichen ausgebildet sein. Alternativ ist auch denkbar, dass die Aufbewahrungseinheit, insbesondere die Halteeinrichtung, eine Platzcodierung aufweist, welche der Anlage, z.B. bei dem Andocken oder bei dem Identifizieren der Bestückungsvorrichtung oder zu einem anderen Zeitpunkt übergeben wird.

Des Weiteren wird vorgeschlagen, dass die Werkzeugaufnahmen in dem Erkennungsschritt unterschiedlichen Werkzeugfuttertyp-Kategorien zugeordnet werden, wobei jede Werkzeugaufnahme anhand der jeweils verwendeten Werkzeugspanntechnik einer der Werkzeugfuttertyp-Kategorien zugeordnet wird und wobei in Zuführungsschritten die kategorisierten Werkzeugaufnahmen von dem Handhabungsroboter jeweils in eine passende Werkzeugspannstation einer Mehrzahl an Werkzeugspannstationen der Multispann- und Mess- und/oder Einstellstation eingesetzt werden oder wobei in alternativen Zuführungsschritten die kategorisierten Werkzeugaufnahmen von dem Handhabungsroboter jeweils in einen passenden Werkzeugplatz einer Mehrzahl an Werkzeugplätzen der Werkzeugmaschine eingesetzt werden. Dadurch kann vorteilhaft eine effektive und betriebssichere Automatisierung des Ein- und/oder Ausspannvorgangs von Werkzeugen in/aus verschiedenen Typen von Werkzeugaufnahmen in einer einzelnen Anlage oder eine effektive und betriebssichere Bestückung einer Werkzeugmaschine, die unterschiedliche Werkzeuge (Komplettwerkzeuge) verwendet, ermöglicht werden.

Außerdem wird vorgeschlagen, dass in zumindest einem Bestückungsschritt eine schräglagig in der Aufbewahrungseinheit gelagerte Werkzeugaufnahme und/oder ein schräglagig in der Aufbewahrungseinheit gelagertes Komplettwerkzeug von einem Handhabungsroboter der Anlage an der Unterseite der Werkzeugaufnahme und/oder des Komplettwerkzeugs gegriffen und aus der Bestückungsvorrichtung entnommen wird. Dadurch kann insbesondere eine besonders vorteilhafte Bereitstellung der Werkzeugaufnahmen und/oder der Komplettwerkzeuge für die durch den Handhabungsroboter bediente Anlage erreicht werden. Insbesondere kann dadurch eine für eine Kinematik des Handhabungsroboters besonders vorteilhafte Bereitstellung der Werkzeugaufnahmen und/oder der Komplettwerkzeuge ermöglicht werden, insbesondere bei gleichzeitig vorteilhaft maximierter Kapazität der Aufbewahrungseinheit. Beispielsweise weist die Unterseite der Werkzeugaufnahme bei einer Ausbildung der Werkzeugaufnahme als ein SK-Werkzeugfutter einen Anzugbolzen auf, an dem der Handhabungsroboter die Werkzeugaufnahme bei einer Entnahme aus der Aufbewahrungseinheit oder bei einer Einlagerung in die Aufbewahrungseinheit (am Außenumfang) greift. Beispielsweise weist die Unterseite der Werkzeugaufnahme bei einer Ausbildung der Werkzeugaufnahme als ein HSK-Werkzeugfutter eine Ausnehmung auf, an deren Innenwänden der Handhabungsroboter die Werkzeugaufnahme bei einer Entnahme aus der Aufbewahrungseinheit oder bei einer Einlagerung in die Aufbewahrungseinheit greift.

### Zeichnungen

Weitere Vorteile ergeben sich aus der folgenden Zeichnungsbeschreibung. In den Zeichnungen ist ein Ausführungsbeispiel der Erfindung dargestellt.

Es zeigen:
- Fig. 1: eine schematische Darstellung einer Anlage mit einer Bestückungsvorrichtung,
- Fig. 2: einen schematischen Aufbau einer als Multispann- und Mess- und/oder Einstellstation ausgebildeten Anlage,
- Fig. 3: eine schematische perspektivische Ansicht einer Vorderseite eines Transportsystems und eines Bestückungssystems mit der Bestückungsvorrichtung in einem geöffneten Zustand,
- Fig. 4: eine schematische Schnittansicht durch das Bestückungssystem mit der Bestückungsvorrichtung und mit Werkzeugaufnahmen,
- Fig. 5: eine schematische perspektivische Ansicht einer Vorderseite des Bestückungssystems mit der Bestückungsvorrichtung in einem geschlossenen Zustand,
- Fig. 6: eine schematische perspektivische Ansicht einer weiteren Halteeinrichtung für Werkzeuge der Bestückungsvorrichtung,
- Fig. 7: eine schematische perspektivische Ansicht einer Rückseite eines Transportsystems und eines Bestückungssystems mit der Bestückungsvorrichtung,
- Fig. 8: eine schematische Ansicht einer Unterseite der Bestückungsvorrichtung,
- Fig. 9: eine schematische Ansicht eines Handhabungsroboters der als Multispann- und Mess- und/oder Einstellstation ausgebildeten Anlage und
- Fig. 10: ein schematisches Ablaufdiagramm eines Verfahrens zu einer Bestückung der Anlage.

### Beschreibung des Ausführungsbeispiels

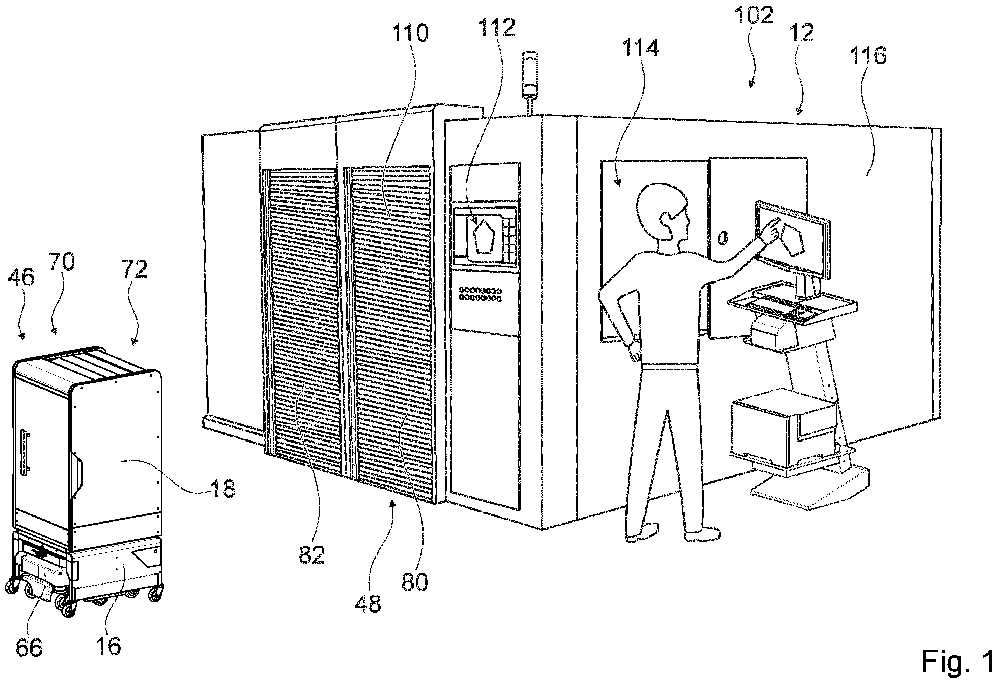

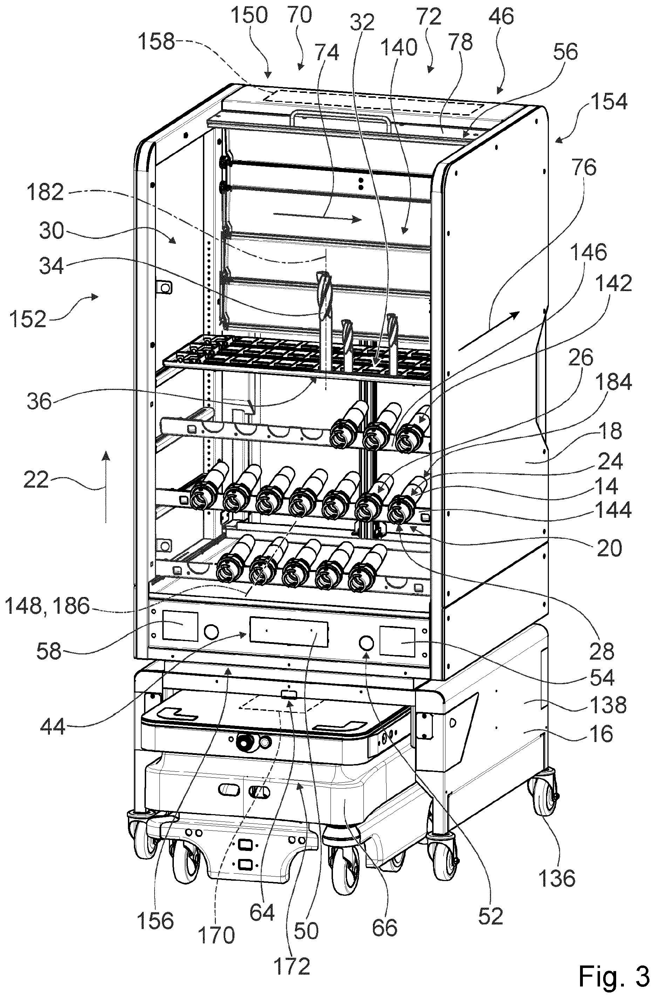

Die Fig. 1 zeigt eine schematische Darstellung einer Anlage 12. Die Anlage 12 ist als eine Multispann- und Mess- und/oder Einstellstation 102 ausgebildet. Alternativ könnte die Anlage 12 z.B. auch als eine Werkzeugmaschine (nicht dargestellt) oder dergleichen ausgebildet sein. Die Anlage 12 umfasst eine Bestückungsvorrichtung 46. Die Bestückungsvorrichtung 46 ist als ein mobiles Aufbewahrungssystem für Werkzeuge 34 und Werkzeugaufnahmen 14 (vgl. Fig. 3) ausgebildet. Es ist denkbar, dass eine Anlage 12 mehrere zumindest im Wesentlichen identisch zueinander ausgebildete Bestückungsvorrichtungen 46 aufweist. Die Anlage 12 weist eine erste Schleuseneinheit 80 auf. Die Anlage 12 weist eine zweite Schleuseneinheit 82 auf. Die Schleuseneinheiten 80, 82 bilden jeweils einen Ort 48 der Anlage 12 aus, welcher zu einem Andocken von Bestückungsvorrichtungen 46 vorgesehen ist. Die Schleuseneinheiten 80, 82 sind jeweils mittels Abdeckeinheiten 110 der Anlage 12 nach außen hin verschließbar ausgebildet. Jede der Schleuseneinheiten 80, 82 ist zumindest zu einer teilweisen Aufnahme einer der Bestückungsvorrichtungen 46 vorgesehen. Vorzugsweise entsprechen die Öffnungsmaße der Schleuseneinheiten 80, 82 etwa den Außenmaßen der Bestückungsvorrichtungen 46. Die Anlage 12 umfasst ein Bedienpanel 112, welches zumindest zu einer Steuerung der Schleuseneinheiten 80, 82 und/oder weiterer Komponenten der Anlage 12 vorgesehen ist. Die Anlage 12 umfasst zudem einen von den Schleuseneinheiten 80, 82 getrennt ausgebildeten Wartungszugang 114. Die Fig. 1 zeigt zudem ein Transportsystem 72 mit der Bestückungsvorrichtung 46 und mit einer mit der Bestückungsvorrichtung 46 betriebsmäßig koppelbaren und von der Bestückungsvorrichtung 46 betriebsmäßig trennbaren autonomen oder ferngesteuerten Transporteinrichtung 66.

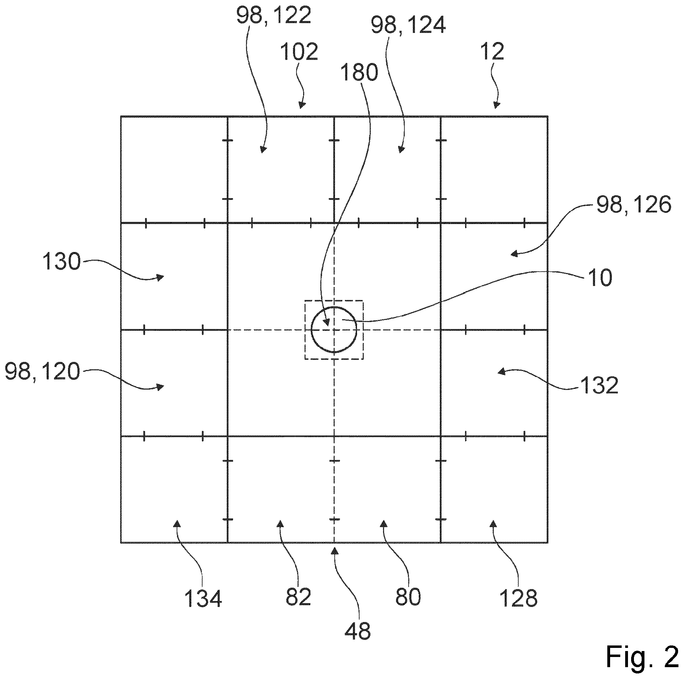

Die Fig. 2 zeigt einen schematischen Aufbau der als Multispann- und Mess- und/oder Einstellstation 102 ausgebildeten Anlage 12. Die Anlage 12 weist eine Umhausung 116 (vgl. Fig. 1) auf, welche alle im Folgenden genannten (immobilen) Bestandteile der Anlage 12 umschließt. Die Anlage 12 umfasst einen Handhabungsroboter 10. Der Handhabungsroboter 10 ist an einer zentralen Position der Anlage 12 positioniert, von der aus dem Handhabungsroboter 10 ein Zugriff auf alle im Folgenden aufgeführten Geräte der Anlage 12 ermöglicht ist. Der Handhabungsroboter 10 ist zu einer automatischen Bestückung aller Einzelgeräte der Anlage 12 mit Werkzeugen 34 und/oder Werkzeugaufnahmen 14 vorgesehen. Der Handhabungsroboter 10 ist zu einer Bestückung der Bestückungsvorrichtung 46 mit Werkzeugen 34 und/oder mit Werkzeugaufnahmen 14 vorgesehen. Im Falle einer Ausbildung der Anlage 12 als eine Werkzeugmaschine kann der Handhabungsroboter 10 beispielsweise auch zu einer Bestückung eines Bearbeitungsgeräts der Werkzeugmaschine mit Komplettwerkzeugen vorgesehen sein. Der Handhabungsroboter 10 ist zu einer Entnahme von Werkzeugen 34 und/oder Werkzeugaufnahmen 14 aus der Bestückungsvorrichtung 46 vorgesehen. Der Handhabungsroboter 10 ist zu einer Entnahme von Werkzeugen 34 und/oder Werkzeugaufnahmen 14 aus den Einzelgeräten der Anlage 12 vorgesehen. Die Anlage 12 umfasst Werkzeugspannstationen 98 zu einem zumindest teilautomatisierten Einspannen von Werkzeugen 34 in Werkzeugaufnahmen 14 und/oder zu einem zumindest teilautomatisierten Ausspannen von Werkzeugen 34 aus Werkzeugaufnahmen 14. Die Anlage 12 umfasst mehrere unterschiedliche Werkzeugspannstationen 98 für unterschiedliche Einspannmethoden. Die Anlage 12 umfasst ein Schrumpfspanngerät 120 für Schrumpfspannfutter. Die Anlage 12 umfasst ein Hydrodehn-Spanngerät 122 (eine Hydrodehn-Schraubstation) für Hydrodehn-Spannfutter. Die Anlage 12 umfasst eine Pressspannstation 124 (für powRgrip^{®}-Werkzeugaufnahmen) für Pressspannfutter. Die Anlage 12 umfasst eine Überwurfmutter-Spannstation 126 (eine Überwurfmutter-Schraubstation) für Werkzeugfutter mit Überwurfmuttern. Die Anlage 12 umfasst ein Mess- und/oder Einstellgerät 128 zu einem zumindest teilautomatisierten Einstellen und/oder optischen Vermessen von Werkzeugen 34 und/oder Werkzeugaufnahmen 14. Die Anlage 12 umfasst ein Kühlgerät 130 zu einem automatisierten Abkühlen von zuvor in einem Schrumpfspannvorgang erhitzten Werkzeugaufnahmen 14. Die Anlage 12 umfasst ein Werkzeugmontagegerät 132 zu einer automatisierten Montage von mehrteiligen Werkzeugen 34. Die Anlage 12 umfasst eine Wuchtstation 134 zu einem zumindest teilautomatisierten Wuchten von Werkzeugaufnahmen 14 mit oder ohne eingespannte Werkzeuge 34.

Die Fig. 3 zeigt eine schematische perspektivische Ansicht des Transportsystems 72. Die Fig. 3 zeigt eine schematische perspektivische Ansicht eines Bestückungssystems 70. Das Bestückungssystem 70 weist die Bestückungsvorrichtung 46 auf. Das Bestückungssystem 70 weist mehrere in der Bestückungsvorrichtung 46 angeordnete Werkzeugaufnahmen 14 auf. Das Bestückungssystem 70 weist mehrere in der Bestückungsvorrichtung 46 angeordnete Werkzeuge 34 auf. Nicht dargestellt, aber denkbar ist, dass das Bestückungssystem 70 zudem ein oder mehrere in der Bestückungsvorrichtung 46 angeordnete Komplettwerkzeuge aufweist.

Die Bestückungsvorrichtung 46 ist zu einer Bestückung der Anlage 12 mit den Werkzeugaufnahmen 14, den Werkzeugen 34 und/oder den Komplettwerkzeugen vorgesehen. Die Bestückungsvorrichtung 46 ist zu einer Bereitstellung der Werkzeugaufnahmen 14, Werkzeuge 34 und/oder Komplettwerkzeuge für den Handhabungsroboter 10 der Anlage 12 vorgesehen. Die Bestückungsvorrichtung 46 weist eine fahrbare Untergestelleinheit 16 auf. Die fahrbare Untergestelleinheit 16 umfasst vier Räder 136. Die fahrbare Untergestelleinheit 16 umfasst ein Rahmengestell 138. Die Räder 136 sind an das Rahmengestell 138 montiert. Die Bestückungsvorrichtung 46 weist eine Aufbewahrungseinheit 18 auf. Die Aufbewahrungseinheit 18 ist zu einer Lagerung der Werkzeugaufnahmen 14, der Werkzeuge 34 und/oder der Komplettwerkzeuge vorgesehen. Die Aufbewahrungseinheit 18 bildet einen Aufnahmeraum 140 aus. Die von der Aufbewahrungseinheit 18 aufgenommenen Werkzeuge 34, Werkzeugaufnahmen 14 und/oder Komplettwerkzeuge sind innerhalb von dem Aufnahmeraum 140 positioniert. Die Aufbewahrungseinheit 18 ist auf der fahrbaren Untergestelleinheit 16 angeordnet. Die Aufbewahrungseinheit 18 ist an der fahrbaren Untergestelleinheit 16 befestigt. Die Aufbewahrungseinheit 18 ist auf die fahrbare Untergestelleinheit 16 aufgesetzt. Die Aufbewahrungseinheit 18 umfasst eine Aufstellrichtung 22. Die Aufbewahrungseinheit 18 ist in der Aufstellrichtung 22 oberhalb der fahrbaren Untergestelleinheit 16 angeordnet.

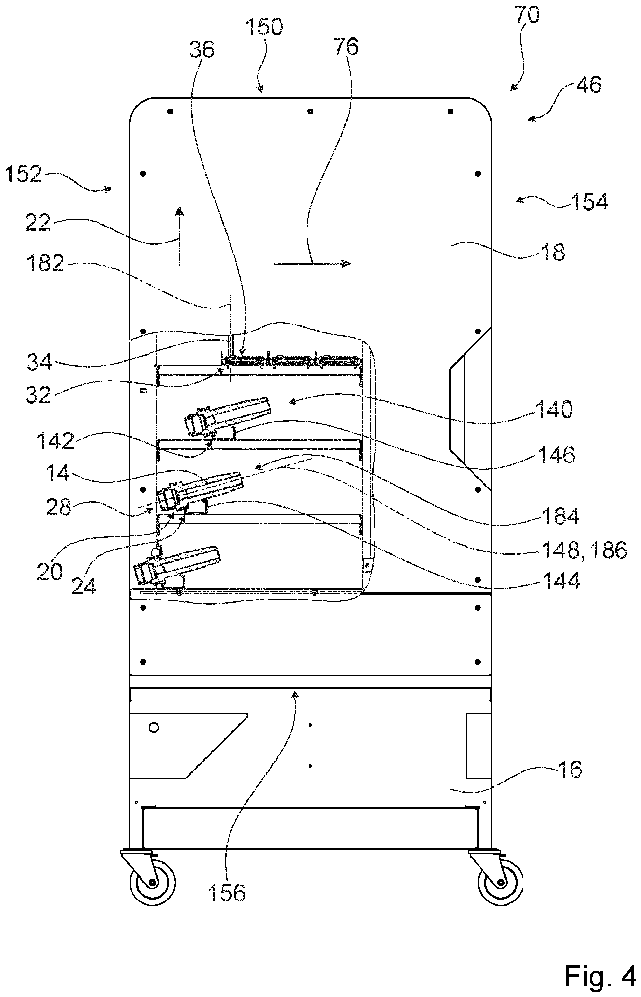

Die Aufbewahrungseinheit 18 weist eine Halteeinrichtung 20 zu einer Halterung der Werkzeugaufnahmen 14 und/oder der Komplettwerkzeuge innerhalb des Aufnahmeraums 140 auf. Die Halteeinrichtung 20 weist eine Mehrzahl an identisch zueinander ausgebildeten Halteplätzen 24, 26, 142 auf. Verschiedene Halteplätze 24, 26 der Mehrzahl an Halteplätzen 24, 26 ,142 sind horizontal (senkrecht zur Aufstellrichtung 22) nebeneinander angeordnet. Verschiedene Halteplätze 24, 142 der Mehrzahl an Halteplätzen 24, 26, 142 sind vertikal (in Aufstellrichtung 22) übereinander angeordnet. Die Halteeinrichtung 20 umfasst zur Ausbildung der Halteplätze 24, 26, 142 rechenartig ausgebildete und waagrecht in dem Aufnahmeraum 140 positionierte Halteschienen 144, 146. Mehrere Halteschienen 144, 146 sind in dem Aufnahmeraum 140 übereinander angeordnet. Benachbarte Halteschienen 144, 146 sind innerhalb des Aufnahmeraums 140 in einer Tiefenrichtung 76 der Aufbewahrungseinheit 18 zueinander versetzt. Eine weiter unten liegende Halteschiene 144 der Halteeinrichtung 20 liegt näher an einer Be- und/oder Entladeöffnung 30 der Aufbewahrungseinheit 18 als eine darüber angeordnete Halteschiene 146 der Halteeinrichtung 20. Benachbarte Halteschienen 144, 146 sind mit aufsteigender Höhe innerhalb des Aufnahmeraums 140 in der Tiefenrichtung 76 nach innen (von der Be- und/oder Entladeöffnung 30 weg) versetzt (vgl. auch Fig. 4). Die Tiefenrichtung 76 der Aufbewahrungseinheit 18 erstreckt sich horizontal zwischen zwei Seiten der Aufbewahrungseinheit 18, insbesondere zwischen einer Vorderseite 152 der Aufbewahrungseinheit 18 und einer Rückseite 154 der Aufbewahrungseinheit 18. Die Tiefenrichtung 76 erstreckt sich senkrecht zu den Halteschienen 144, 146 der Halteeinrichtung 20. Die Halteschienen 144, 146 der Halteeinrichtung 20 sind manuell aus der Aufbewahrungseinheit 18 entnehmbar und/oder austauschbar und/oder auf einer anderen Höhe relativ zur Aufstellrichtung 22 und/oder in einer anderen Tiefe relativ zu der Tiefenrichtung 76 anordenbar.

Die Aufbewahrungseinheit 18 weist die Be- und/oder Entladeöffnung 30 auf. Die Be- und/oder Entladeöffnung 30 ist dazu vorgesehen, in einem geöffneten Zustand einen Zugriff von außen auf den Aufnahmeraum 140 der Aufbewahrungseinheit 18 zu ermöglichen. Die Be- und/oder Entladeöffnung 30 ist auf der Vorderseite 152 der Aufbewahrungseinheit 18 angeordnet. Die Be- und/oder Entladeöffnung 30 ist auf einer langen (breiten) Seite der Aufbewahrungseinheit 18 angeordnet. Die Be- und/oder Entladeöffnung 30 weist eine Breite auf, welche etwa einer Breite der Aufbewahrungseinheit 18 in einer Breitenrichtung 74 der Aufbewahrungseinheit 18 entspricht. Die Breitenrichtung 74 erstreckt sich horizontal zwischen zwei Seiten der Aufbewahrungseinheit 18, insbesondere zwischen zwei von der Vorderseite 152 und der Rückseite 154 verschiedenen Seiten der Aufbewahrungseinheit 18. Die Breitenrichtung 74 erstreckt sich parallel zu den Halteschienen 144, 146 der Halteeinrichtung 20. Die Be- und/oder Entladeöffnung 30 weist eine Höhe auf, welche etwa einer Höhe der Aufbewahrungseinheit 18 in der Aufstellrichtung 22 der Aufbewahrungseinheit 18 entspricht. Die Be- und/oder Entladeöffnung 30 erstreckt sich über einen Teil (Großteil) einer Oberseite 150 der Aufbewahrungseinheit 18. Die Be- und/oder Entladeöffnung 30 erstreckt sich über eine Kante der Aufbewahrungseinheit 18 von der Vorderseite 152 der Aufbewahrungseinheit 18 zu der Oberseite 150 der Aufbewahrungseinheit 18. Die Aufstellrichtung 22 erstreckt sich parallel zu der Vorderseite 152 oder der Rückseite 154 der Aufbewahrungseinheit 18 von einer Unterseite 156 der Aufbewahrungseinheit 18 zu der Oberseite 150 der Aufbewahrungseinheit 18.

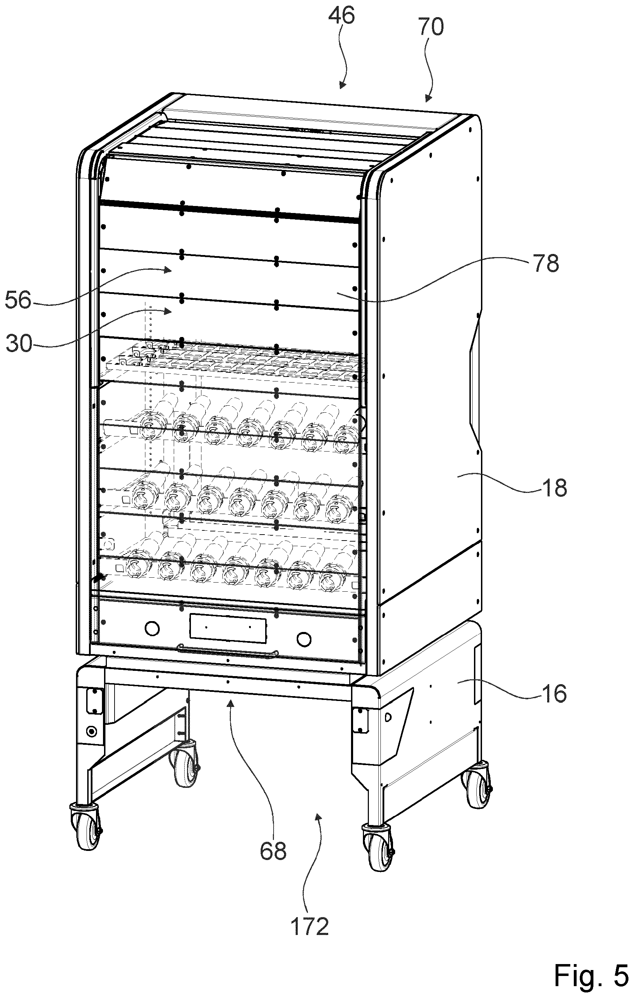

Die Be- und/oder Entladeöffnung 30 weist eine Verschlusseinheit 56 auf. Die Verschlusseinheit 56 umfasst zumindest ein Verschlusselement 78. Das Verschlusselement 78 ist dazu vorgesehen, die Be- und/oder Entladeöffnung 30 wahlweise zu verschließen, vorzugsweise zu bedecken. Das Verschlusselement 78 ist beispielhaft als ein Rollo ausgebildet. Das Rollo ist zu der Oberseite 150 der Aufbewahrungseinheit 18 hin öffenbar und zu der Unterseite 156 der Aufbewahrungseinheit 18 hin schließbar. Die Be- und/oder Entladeöffnung 30 bildet eine primäre Be- und/oder Entladeöffnung 30 aus. Die Bestückungsvorrichtung 46 weist eine Antriebseinheit 158 auf, welche dazu vorgesehen ist, eine Öffnungsbewegung des Verschlusselements 78 und/oder eine Schließbewegung des Verschlusselements 78 zu erzeugen. Das Verschlusselement 78 ist transparent (siehe auch Fig. 5)

Die Fig. 4 zeigt eine schematische Schnittansicht durch das Bestückungssystem 70 mit der Bestückungsvorrichtung 46 und mit den Werkzeugaufnahmen 14. Die Halteeinrichtung 20, insbesondere die Halteplätze 24, 26, 142 der Halteschienen 144, 146, sind zu einer relativ zu der Aufstellrichtung 22 der Aufbewahrungseinheit 18 schräglagigen Halterung der Werkzeugaufnahmen 14 (und/oder der Komplettwerkzeuge), insbesondere in Bezug auf eine Längsachse 148 der Werkzeugaufnahmen 14 (und/oder der Komplettwerkzeuge), vorgesehen. Die Längsachse 148 der in der Halteeinrichtung 20 gelagerten Werkzeugaufnahmen 14 (und/oder Komplettwerkzeuge) verläuft aus einer zu der Breitenrichtung 74 der Aufbewahrungseinheit 18 parallel verlaufenden Richtung gesehen schräg, insbesondere angewinkelt, vorzugsweise in einem spitzen Winkel (bei einem zwischen der Aufstellrichtung 22 und der Längsachse 148 mit einem mathematisch positiven Drehsinn aufgespannten Winkel), relativ zu der Aufstellrichtung 22. Die Längsachse 148 der Werkzeugaufnahme 14 verläuft parallel zu einer gedachten Verlängerung einer vorgesehenen Rotationsachse 186 der Werkzeugaufnahme 14. Die Längsachse 148 der Werkzeugaufnahme 14 verläuft von einem Zentrum einer Oberseite 184 der Werkzeugaufnahme 14 zu einem Zentrum einer Unterseite 28 der Werkzeugaufnahme 14. Die Längsachse 148 der Werkzeugaufnahme 14 verläuft parallel zu einer längsten Kante eines kleinsten geometrischen Quaders, welcher die Werkzeugaufnahme 14 gerade noch vollständig umschließt. Die Halteeinrichtung 20, insbesondere die Halteplätze 24, 26, 142 der Halteschienen 144, 146, sind zu einer relativ zu der Tiefenrichtung 76 der Aufbewahrungseinheit 18 schräglagigen Halterung der Werkzeugaufnahmen 14 (und/oder der Komplettwerkzeuge), insbesondere in Bezug auf die Längsachse 148 der Werkzeugaufnahmen 14 (und/oder der Komplettwerkzeuge), vorgesehen. Die Längsachse 148 der in der Halteeinrichtung 20 gelagerten Werkzeugaufnahmen 14 (und/oder Komplettwerkzeuge) verläuft aus einer zu der Breitenrichtung 74 der Aufbewahrungseinheit 18 parallel verlaufenden Richtung gesehen schräg, insbesondere angewinkelt, vorzugsweise in einem spitzen Winkel (bei einem zwischen der Tiefenrichtung 76 und der Längsachse 148 mit einem mathematisch positiven Drehsinn aufgespannten Winkel), relativ zu der Tiefenrichtung 76. Die Halteeinrichtung 20, insbesondere die Halteplätze 24, 26, 142 der Halteschienen 144, 146, sind zu einer relativ zu der Breitenrichtung 74 (vgl. Fig. 3) der Aufbewahrungseinheit 18 senkrechten Halterung der Werkzeugaufnahmen 14 (und/oder der Komplettwerkzeuge), insbesondere in Bezug auf die Längsachse 148 der Werkzeugaufnahmen 14 (und/oder der Komplettwerkzeuge), vorgesehen. Die Längsachse 148 der in der Halteeinrichtung 20 gelagerten Werkzeugaufnahmen 14 (und/oder Komplettwerkzeuge) verläuft aus einer parallel zu der Aufstellrichtung 22 verlaufenden Richtung gesehen senkrecht relativ zu der Breitenrichtung 74.

Die Halteplätze 24, 26, 142 der Halteeinrichtung 20 sind derart ausgebildet, dass die Unterseite 28 der in die Halteeinrichtung 20 eingelegten Werkzeugaufnahme 14 und/oder eine Unterseite eines in die Halteeinrichtung 20 eingelegten Komplettwerkzeugs teilweise in Richtung des seitlich an der Aufbewahrungseinheit 18 angeordneten Teils der Be- und/oder Entladeöffnung 30, insbesondere des an der Vorderseite 152 der Aufbewahrungseinheit 18 angeordneten Teils der Be- und/oder Entladeöffnung 30, zeigt. Die Halteplätze 24, 26, 142 der Halteeinrichtung 20 sind derart ausgebildet, dass die Unterseite 28 der in die Halteeinrichtung 20 eingelegten Werkzeugaufnahme 14 und/oder die Unterseite eines in die Halteeinrichtung 20 eingelegten Komplettwerkzeugs in einem ordnungsgemäß an der Anlage 12 angeordneten Betriebszustand in Richtung des Handhabungsroboters 10 zeigt.

Die Aufbewahrungseinheit 18 weist eine weitere Halteeinrichtung 32 auf (siehe Fig. 3). Die weitere Halteeinrichtung 32 ist zu einer aufrechten Halterung von (mit den gleichzeitig in der Halteeinrichtung 20 gehalterten Werkzeugaufnahmen 14 kombinierbaren) Werkzeugen 34 vorgesehen. Eine Werkzeugrotationsachse 182 der in der weiteren Halteeinrichtung 32 aufrecht gehalterten Werkzeuge 34 verläuft parallel zu der Aufstellrichtung 22. Die Werkzeugrotationsachse 182 eines Werkzeugs 34 verläuft parallel zu einer längsten Kante eines kleinsten geometrischen Quaders, welcher das Werkzeug 34 gerade noch vollständig umschließt. Die weitere Halteeinrichtung 32 umfasst Halteplätze 36. Die Halteplätze 36 der weiteren Halteeinrichtung 32 sind in der Aufstellrichtung 22 oberhalb der Halteplätze 24, 26, 142 der Halteeinrichtung 20 angeordnet. Die Halteplätze 36 der weiteren Halteeinrichtung 32 sind derart angeordnet, dass der Handhabungsroboter 10 von der Oberseite 150 der Aufbewahrungseinheit 18 aus auf die Werkzeuge 34 zugreifen kann. Die Halteplätze 36 der weiteren Halteeinrichtung 32 sind in mehreren Reihen hintereinander angeordnet. Die Reihen von Halteplätzen 36 der weiteren Halteeinrichtung 32 sind relativ zu der Aufstellrichtung 22 alle auf einer gleichen Höhe angeordnet. Die einzelnen Reihen von Halteplätzen 36 der weiteren Halteeinrichtung 32 sind manuell aus der Aufbewahrungseinheit 18 entnehmbar und/oder austauschbar und/oder auf einer anderen Höhe relativ zur Aufstellrichtung 22 anordenbar.

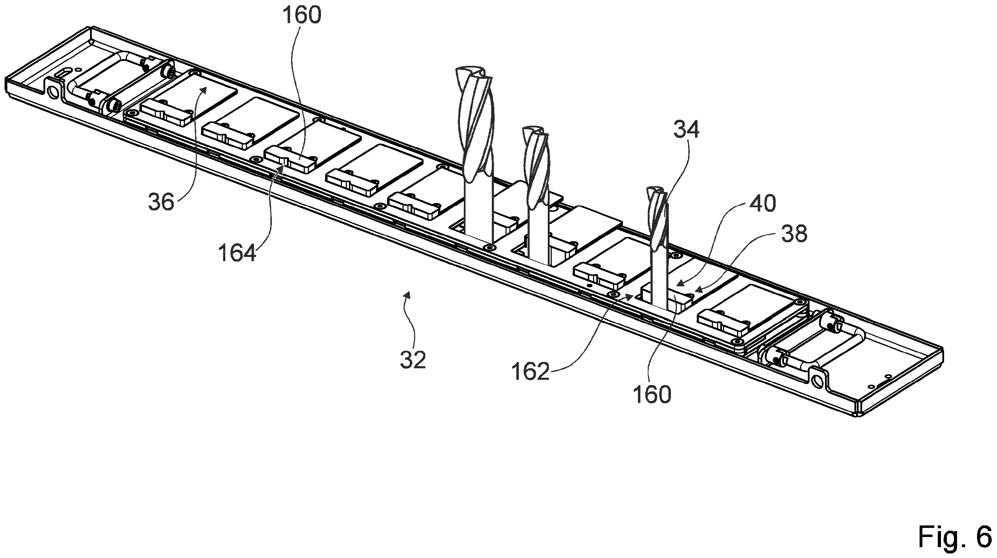

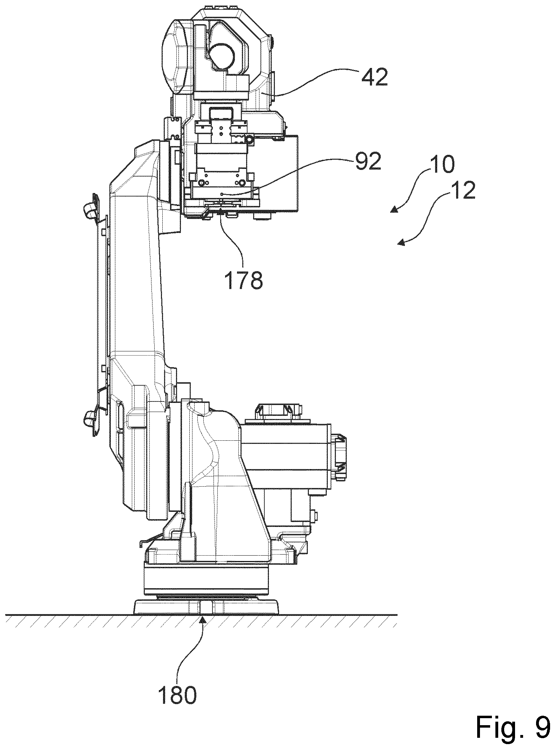

Die Fig. 6 zeigt eine schematische perspektivische Ansicht einer Reihe von Halteplätzen 36 der weiteren Halteeinrichtung 32. Die Halteplätze 36 der weiteren Halteeinrichtung 32 weisen universell bestückbare Werkzeug-Schnapphalterungen 38 auf. Die Werkzeug-Schnapphalterungen 38 weisen jeweils einen Spannmechanismus 40 zu einer positionsfesten und ausgerichteten Fixierung des jeweiligen Werkzeugs 34 in dem jeweiligen Halteplatz 36 der weiteren Halteeinrichtung 32 auf. Der Spannmechanismus 40 umfasst ein Spannelement 160. Das Spannelement 160 ist innerhalb einer Ausnehmung 162 angeordnet und in eine Richtung, vorzugsweise in eine Horizontalrichtung, bevorzugt in der Tiefenrichtung 76, vorgespannt. Das Spannelement 160 ist beispielsweise mittels einer mechanischen Feder vorgespannt. Das Spannelement 160 weist in der Vorspannrichtung ein Ausrichtelement 164 auf. Das Ausrichtelement 164 ist als eine prismenförmige und vertikal erstreckte Rille ausgebildet. Der Spannmechanismus 40 ist dazu vorgesehen, einen Werkzeugschaft eines Werkzeugs 34 zwischen einem Rand der Ausnehmung 162 und dem Spannelement 160 im Bereich des Ausrichtelements 164 einzuklemmen. Der Spannmechanismus 40, insbesondere eine Bewegung des Spannelements 160 innerhalb der Ausnehmung 162, ist durch eine Bewegung eines Roboterarms 42 (vgl. Fig. 9) des Handhabungsroboters 10 entlang einer Bewegungsbahn des Roboterarms 42 bedienbar.

Die Bestückungsvorrichtung 46 weist eine Andockeinrichtung 44 auf (vgl. Fig. 3). Die Andockeinrichtung 44 ist zu einem zumindest teilautomatisierten und/oder sensorgesteuerten Andocken der Bestückungsvorrichtung 46, insbesondere der Aufbewahrungseinheit 18 und/oder der fahrbaren Untergestelleinheit 16, an dem für das Andocken vorgesehenen Ort 48 der Anlage 12 vorgesehen (vgl. Fig. 1). Die Andockeinrichtung 44 ist zu einem Andocken an den Schleuseneinheiten 80, 82 vorgesehen. Die Andockeinrichtung 44 weist einen Andocksensor 50 auf. Der Andocksensor 50 ist dazu vorgesehen, ein korrektes Andocken der Bestückungsvorrichtung 46 relativ zu der Anlage 12, insbesondere an den Schleuseneinheiten 80, 82, zu detektieren. Der Andocksensor 50 ist beispielhaft als ein Annäherungssensor ausgebildet. Der Andocksensor 50 ist dazu vorgesehen, ein Messsignal auszugeben, aus dem ermittelt werden kann, ob die Bestückungsvorrichtung 46 in einem Andockbereich der Anlage 12, insbesondere in dem für das Andocken vorgesehenen Ort 48 der Anlage 12, positioniert ist. Die Verschlusseinheit 56 umfasst eine Verriegelungseinheit (nicht gezeigt). Die Verriegelungseinheit ist dazu vorgesehen, das Verschlusselement 78 zumindest in einem geschlossenen Zustand zu verriegeln. Der Verrieglungszustand der Verschlusseinheit 56 ist abhängig von dem Messsignal des Andocksensors 50. Bei einer Detektion einer Positionierung der Bestückungsvorrichtung 46 in dem Andockbereich der Anlage 12, insbesondere in dem für das Andocken vorgesehenen Ort 48 der Anlage 12, wird die Verschlusseinheit 56 automatisch entriegelt. Bei einer Detektion einer Positionierung der Bestückungsvorrichtung 46, welche von dem Andockbereich der Anlage 12, insbesondere von dem für das Andocken vorgesehenen Ort 48 der Anlage 12, abweicht, wird die Verschlusseinheit 56 automatisch verriegelt und/oder bleibt die Verschlusseinheit 56 verriegelt.

Die Andockeinrichtung 44 weist eine Schnittstelle 54 auf. Die Schnittstelle 54 ist an der Aufbewahrungseinheit 18 angeordnet. Alternativ könnte die Schnittstelle 54 auch an der fahrbaren Untergestelleinheit 16 angeordnet sein. Die Schnittstelle 54 ist als eine elektrische oder pneumatische Schnittstelle ausgebildet. Die Schnittstelle 54 ist zu einer Übertragung einer Antriebsenergie für eine Öffnungs- und/oder Schließbewegung des die Be- und/oder Entladeöffnung 30 der Aufbewahrungseinheit 18 verschließenden Verschlusselements 78 vorgesehen. Die Schnittstelle 54 ist zu einer Übertragung einer Antriebsenergie an die (in der Aufbewahrungseinheit 18 oder in der fahrbaren Untergestelleinheit 16 integrierten) Antriebseinheit 158 vorgesehen. Die Schnittstelle 54 ist zu einer externen Steuerung einer Öffnungs- und/oder Schließbewegung der Verschlusseinheit 56, insbesondere der die Öffnungs- und/oder Schließbewegung des Verschlusselements 78 antreibenden Antriebseinheit 158, vorgesehen. Die Anlage 12 weist eine Schnittstelle (nicht gezeigt) auf. Die Schnittstelle 54 der Bestückungsvorrichtung 46 ist in dem angedockten Zustand mit der Schnittstelle der Anlage 12 verbunden.

Die Andockeinrichtung 44 weist ein Identifikationselement 58 auf. Das Identifikationselement 58 ist zu einer automatischen Identifizierung der jeweiligen sich der Anlage 12, insbesondere den Schleuseneinheiten 80, 82, nähernden Bestückungsvorrichtung 46 durch die Anlage 12 vorgesehen. Das Identifikationselement 58 ist in der Aufbewahrungseinheit 18 oder der fahrbaren Untergestelleinheit 16 integriert oder an der Aufbewahrungseinheit 18 oder der fahrbaren Untergestelleinheit 16 angebracht. Das Identifikationselement 58 ist beispielhaft als ein RFID-Chip ausgebildet. Die Anlage 12 weist im Gegenzug ein (nicht gezeigtes) Ausleseelement auf, z.B. einen RFID-Reader, welcher dazu vorgesehen ist, das Identifikationselement 58 auszulesen.

Die Andockeinrichtung 44 weist eine Fixiereinheit 52 auf. Die Fixiereinheit 52 ist dazu vorgesehen, die fahrbare Untergestelleinheit 16 und/oder die Aufbewahrungseinheit 18 bei einem Andocken an der Anlage 12 in dem für das Andocken vorgesehenen Ort 48 der Anlage 12 zu fixieren. Beispielhaft ist die Andockeinrichtung 44 als ein Magnet, insbesondere ein Permanentmagnet oder ein Elektromagnet, ausgebildet, welcher dazu vorgesehen ist, mit einer (nicht gezeigten) Magneteinheit der Anlage 12 wechselzuwirken.

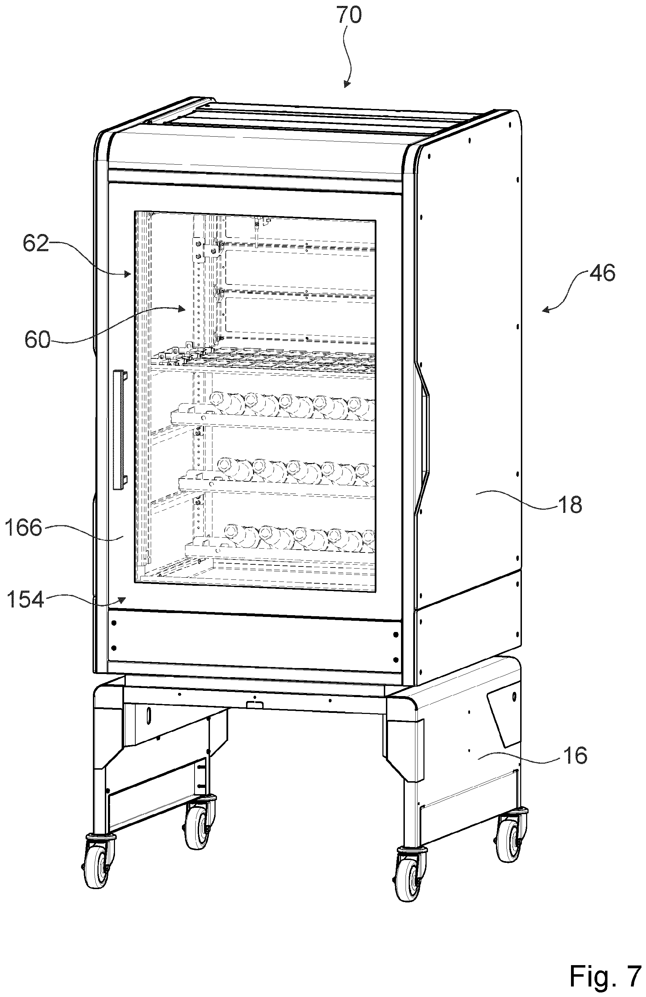

Die Fig. 7 zeigt eine schematische Ansicht der Rückseite 154 der Bestückungsvorrichtung 46. Die Aufbewahrungseinheit 18 weist zusätzlich zu der primären Be- und/oder Entladeöffnung 30 eine sekundäre Be- und/oder Entladeöffnung 60 auf. Die Aufbewahrungseinheit 18 weist eine Verriegelungsvorrichtung (nicht gezeigt) auf, welche dazu vorgesehen ist, eine die sekundäre Be- und/oder Entladeöffnung 60 verschließende Verschlusseinheit 62, insbesondere ein weiteres Verschlusselement 166 der Aufbewahrungseinheit 18, welches zu einem Verschließen der sekundären Be- und/oder Entladeöffnung 60 vorgesehen ist, im an die Anlage 12 angedockten Zustand der Bestückungsvorrichtung 46 zu verriegeln. Die sekundäre Be- und/oder Entladeöffnung 60 ist durch das weitere Verschlusselement 166 der Aufbewahrungseinheit 18 manuell öffen- und schließbar. Das weitere Verschlusselement 166 ist beispielhaft als eine Türklappe ausgebildet. Das weitere Verschlusselement 166 ist transparent ausgebildet.

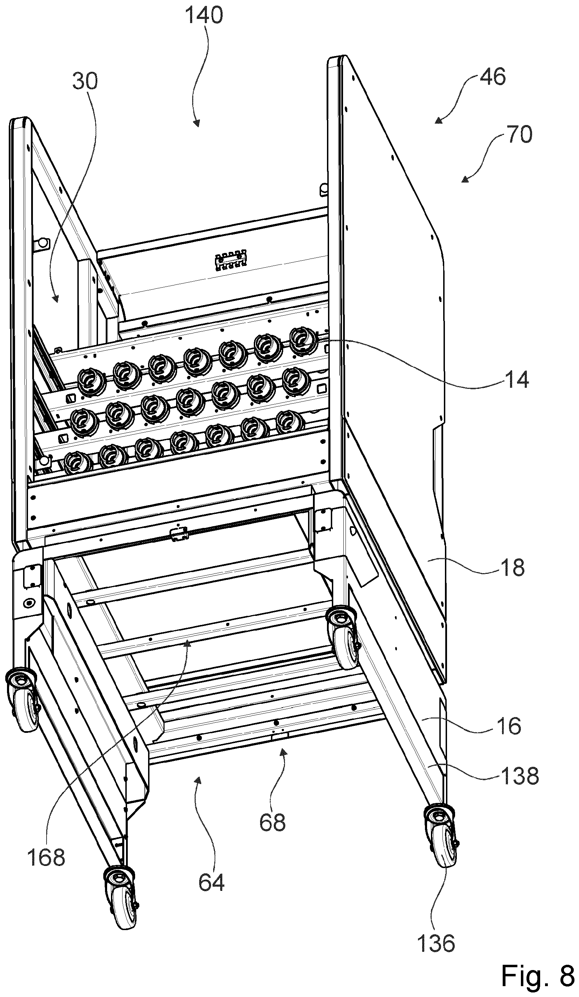

Die Fig. 8 zeigt eine schematische Ansicht der Unterseite 156 der Bestückungsvorrichtung 46, insbesondere der fahrbaren Untergestelleinheit 16. Die fahrbare Untergestelleinheit 16 weist eine Kopplungseinrichtung 64 auf. Die Kopplungseinrichtung 64 ist zu einer Kopplung mit der angetriebenen und autonom fahrenden Transporteinrichtung 66 vorgesehen (vgl. auch Fig. 1). Relativ zu der Aufstellrichtung 22 gesehen ist die Kopplungseinrichtung 64 auf einer Unterseite 68 der fahrbaren Untergestelleinheit 16 angeordnet. Im beispielhaft in der Fig. 8 dargestellten Fall weist die Kopplungseinrichtung 64 zur Erzeugung einer Kopplungskraft einen Kopplungsmagnet 168 zur Wechselwirkung mit einer korrespondierenden Magneteinheit 170 der Transporteinrichtung 66 (vgl. Fig. 3) auf. Alternative, z.B. mechanische oder andere Ausgestaltungen der Kopplungseinrichtung 64 sind denkbar. Die Kopplungseinrichtung 64, insbesondere fahrbare Untergestelleinheit 16, bildet eine Unterfahröffnung 172 aus, welche dazu vorgesehen ist, die Transporteinrichtung 66 aufzunehmen. Die Transporteinrichtung 66 ist dazu vorgesehen, unter die Bestückungsvorrichtung 46 zu fahren und mit der Bestückungsvorrichtung 46 zu einer Übertragung einer Bewegungsenergie von der Transporteinrichtung 66 auf die Bestückungsvorrichtung 46 zu koppeln. Die Bestückungsvorrichtung 46 weist eine Grundfläche von höchstens 1200 mm x 800 mm (Europoolpalette) auf. Die Bestückungsvorrichtung 46 weist eine Höhe von weniger als 2 m, vorzugsweise von weniger al 1,5 m auf.

Die Fig. 9 zeigt eine schematische Ansicht des Handhabungsroboters 10. Der Handhabungsroboter 10 weist den Roboterarm 42 auf. Der Handhabungsroboter 10 weist eine Greifereinheit 178 zu einem Greifen der Werkzeuge 34, der Werkzeugaufnahmen 14 und/oder der Komplettwerkzeuge auf. Der Handhabungsroboter 10 ist in einem Zentrum 180 der Multispann- und Mess- und/oder Einstellstation 102 angeordnet (vgl. Fig. 2). Der Handhabungsroboter 10 hat Zugriff auf alle Einzelstationen der Multispann- und Mess- und/oder Einstellstation 102. Der Handhabungsroboter 10 weist einen integrierten Sensor 92 auf. Alternativ ist denkbar, dass der Sensor 92 getrennt von dem Handhabungsroboter 10 ausgebildet ist und von dem Handhabungsroboter 10 temporär zur Auslesung des Inhalts der Bestückungsvorrichtung 46 gegriffen werden kann. Der Sensor 92 des Handhabungsroboters 10 ist als eine Kamera (mit Beleuchtung) ausgebildet. Der Sensor 92 des Handhabungsroboters 10 ist dazu vorgesehen, insbesondere mittels einer Kamerabilderkennung oder mittels eines Auslesens eines an der jeweiligen Werkzeugaufnahme 14 und/oder an dem jeweiligen Werkzeug 34 angeordneten QR-Codes o.ä., die in der Bestückungsvorrichtung 46 angeordneten Werkzeugaufnahmen 14, Werkzeuge 34 und/oder Komplettwerkzeuge zu identifizieren. Der Sensor 92 des Handhabungsroboters 10 ist dazu vorgesehen, insbesondere mittels einer Kamerabilderkennung, die Positionen der in der Bestückungsvorrichtung 46 angeordneten Werkzeugaufnahmen 14, Werkzeuge 34 und/oder Komplettwerkzeuge zu registrieren.

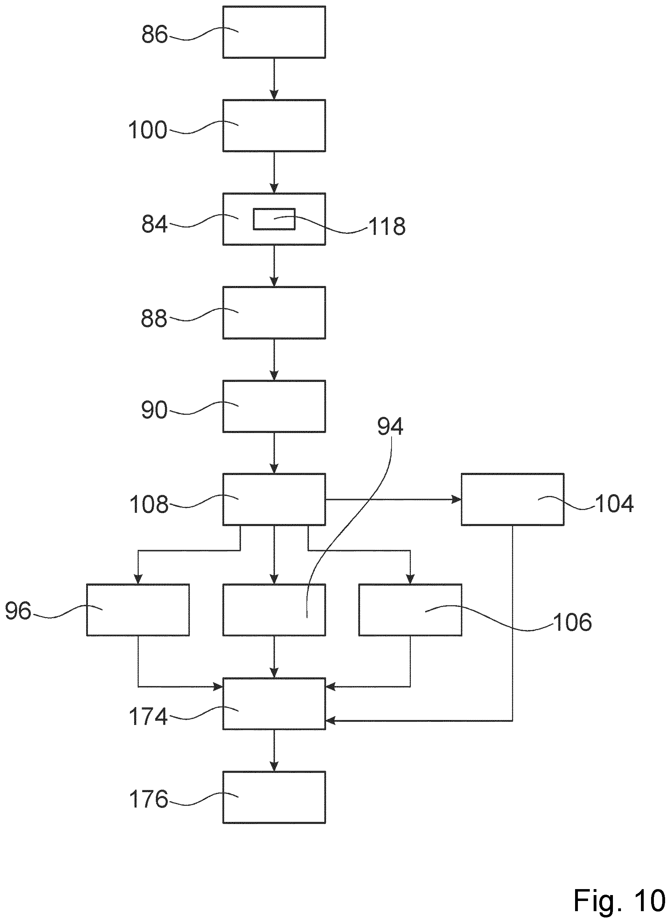

Die Fig. 10 zeigt ein schematisches Ablaufdiagramm eines Verfahrens zu einer Bestückung der Anlage 12, insbesondere der Multispann- und Mess- und/oder Einstellstation 102 und/oder einer Werkzeugmaschine, mittels der Bestückungsvorrichtung 46. In zumindest einem Verfahrensschritt 86 wird die mit mehreren Werkzeugaufnahmen 14 und mit mehreren Werkzeugen 34 beladene und verriegelte Bestückungsvorrichtung 46 mit der Transporteinrichtung 66 gekoppelt. Dazu fährt die Transporteinrichtung 66 in die Unterfahröffnung 172 der fahrbaren Untergestelleinheit 16 hinein und stellt mittels der Kopplungseinrichtung 64 eine Kopplung mit der Bestückungsvorrichtung 46 her. In zumindest einem weiteren Verfahrensschritt 100 wird die Bestückungsvorrichtung 46 an die Anlage 12 angeliefert. In zumindest einem Andockschritt 84 wird die Bestückungsvorrichtung 46 an einer Schleuseneinheit 80, 82 der Anlage 12 angedockt. In dem Andockschritt 84 wird eine Verbindung zwischen den Schnittstellen 54 der Bestückungsvorrichtung 46 und der Anlage 12 hergestellt. In zumindest einem Teilschritt 118 des Andockschritts 84 wird der Andockvorgang von dem Andocksensor 50 überwacht. Bei einer Erkennung eines erfolgreichen Andockens wird ein entsprechendes Messsignal von dem Andocksensor 50 ausgesandt. Bei einer Erkennung eines erfolgreichen Andockens wird das Verschlusselement 78 entriegelt. Bei einer Erkennung eines erfolgreichen Andockens wird das weitere Verschlusselement 166, das die sekundäre Be- und/oder Entladeöffnung 60 verschließt verriegelt. In einem auf den Andockschritt 84 folgenden Öffnungsschritt 88 wird eine Öffnung des die Be- und/oder Entladeöffnung 30 der Bestückungsvorrichtung 46 verschließenden Verschlusselements 78 über die verbundenen Schnittstellen 54 gesteuert. In dem Öffnungsschritt 88 wird die die Öffnung vornehmende Antriebseinheit 158 über die verbundenen Schnittstellen 54 mit Antriebsenergie versorgt.

In zumindest einem vor einer ersten Entnahme einer Werkzeugaufnahme 14 aus der Bestückungsvorrichtung 46 durchgeführten Erkennungsschritt 90 werden von dem Sensor 92 der Anlage 12 alle in der Bestückungsvorrichtung 46 angeordneten Werkzeugaufnahmen 14 identifiziert. In dem Erkennungsschritt 90 werden die Positionen der in der Bestückungsvorrichtung 46 angeordneten Werkzeugaufnahmen 14 registriert. In dem Erkennungsschritt 90 werden die Werkzeugaufnahmen 14 unterschiedlichen Werkzeugfuttertyp-Kategorien zugeordnet. Dabei wird jede Werkzeugaufnahme 14 anhand der jeweils verwendeten Werkzeugspanntechnik einer der Werkzeugfuttertyp-Kategorien zugeordnet. In zumindest einem Bestückungsschritt 108 wird daraufhin eine der schräglagig in der Aufbewahrungseinheit 18 gelagerten Werkzeugaufnahmen 14 und/oder eines der schräglagig in der Aufbewahrungseinheit 18 gelagerten Komplettwerkzeuge von dem Handhabungsroboter 10 der Anlage 12 an der Unterseite 28 der Werkzeugaufnahme 14 und/oder des Komplettwerkzeugs gegriffen und aus der Bestückungsvorrichtung 46 entnommen. In einem oder mehreren Zuführungsschritten 94, 96 werden die kategorisierten Werkzeugaufnahmen 14 von dem Handhabungsroboter 10 jeweils in eine passende Werkzeugspannstation 98 einer Mehrzahl an Werkzeugspannstationen 120, 122, 124, 126 der Multispann- und Mess- und/oder Einstellstation 102 oder in das Mess- und/oder Einstellgerät 128, das Kühlgerät 130, das Werkzeugmontagegerät 132 oder die Wuchtstation 134 eingesetzt. Im Fall einer Werkzeugmaschine werden in alternativen Zuführungsschritten 104, 106 die kategorisierten Werkzeugaufnahmen 14 oder die kategorisierten Komplettwerkzeuge von dem Handhabungsroboter 10 jeweils in einen passenden Werkzeugplatz einer Mehrzahl an Werkzeugplätzen der Werkzeugmaschine eingesetzt.

In zumindest einem weiteren Verfahrensschritt 174 werden Werkzeugaufnahmen 14 und/oder Werkzeuge 34 von dem Handhabungsroboter 10 in die Halteeinrichtungen 20, 32 der Bestückungsvorrichtung 46 eingesetzt. In zumindest einem weiteren Verfahrensschritt 176 wird die gefüllte Bestückungsvorrichtung 46 von der Schleuseneinheit 80, 82 entkoppelt und aus dem Andockbereich entfernt (abgedockt). In dem Verfahrensschritt 176 wird das Verschlusselement 78 geschlossen und verriegelt. In dem Verfahrensschritt 176 wird die geschlossene und verriegelte Bestückungsvorrichtung 46 von der Transporteinrichtung 66 von der Anlage 12 wegtransportiert.

### Bezugszeichen

- 10: Handhabungsroboter
- 12: Anlage
- 14: Werkzeugaufnahme
- 16: fahrbare Untergestelleinheit
- 18: Aufbewahrungseinheit
- 20: Halteeinrichtung
- 22: Aufstellrichtung
- 24: Halteplatz
- 26: Halteplatz
- 28: Unterseite
- 30: Be- und/oder Entladeöffnung
- 32: Weitere Halteeinrichtung
- 34: Werkzeug
- 36: Halteplatz
- 38: Werkzeug-Schnapphalterung
- 40: Spannmechanismus
- 42: Roboterarm
- 44: Andockeinrichtung
- 46: Bestückungsvorrichtung
- 48: Ort
- 50: Andocksensor
- 52: Fixiereinheit
- 54: Schnittstelle
- 56: Verschlusseinheit
- 58: Identifikationselement
- 60: sekundäre Be- und/oder Entladeöffnung
- 62: Verschlusseinheit
- 64: Kopplungseinrichtung
- 66: Transporteinrichtung
- 68: Unterseite
- 70: Bestückungssystem
- 72: Transportsystem
- 74: Breitenrichtung
- 76: Tiefenrichtung
- 78: Verschlusselement
- 80: Schleuseneinheit
- 82: Schleuseneinheit
- 84: Andockschritt
- 86: Verfahrensschritt
- 88: Öffnungsschritt
- 90: Erkennungsschritt
- 92: Sensor
- 94: Zuführungsschritt
- 96: Zuführungsschritt
- 98: Werkzeugspannstation
- 100: Verfahrensschritt
- 102: Multispann- und Mess- und/oder Einstellstation
- 104: Zuführungsschritt
- 106: Zuführungsschritt
- 108: Bestückungsschritt
- 110: Abdeckeinheit
- 112: Bedienpanel
- 114: Wartungszugang
- 116: Umhausung
- 118: Teilschritt
- 120: Schrumpfspanngerät
- 122: Hydrodehn-Spanngerät
- 124: Pressspannstation
- 126: Überwurfmutter-Spannstation
- 128: Mess- und/oder Einstellgerät
- 130: Kühlgerät
- 132: Werkzeugmontagegerät
- 134: Wuchtstation
- 136: Rad
- 138: Rahmengestell
- 140: Aufnahmeraum
- 142: Halteplatz
- 144: Halteschiene
- 146: Halteschiene
- 148: Längsachse
- 150: Oberseite
- 152: Vorderseite
- 154: Rückseite
- 156: Unterseite
- 158: Antriebseinheit
- 160: Spannelement
- 162: Ausnehmung
- 164: Ausrichtelement
- 166: Weiteres Verschlusselement
- 168: Kopplungsmagnet
- 170: Magneteinheit
- 172: Unterfahröffnung
- 174: Verfahrensschritt
- 176: Verfahrensschritt
- 178: Greifereinheit
- 180: Zentrum
- 182: Werkzeugrotationsachse
- 184: Oberseite
- 186: Rotationsachse

## Patentansprüche

1. Bestückungsvorrichtung (46) für eine Bestückung einer, insbesondere zumindest einen Handhabungsroboter (10) umfassenden, Anlage (12), insbesondere einer Multispann- und Mess- und/oder Einstellstation (102) für Werkzeuge (34) und/oder Werkzeugaufnahmen (14) und/oder einer Werkzeugmaschine, zumindest mit Werkzeugaufnahmen (14) und/oder mit, fixe Kombinationen aus Werkzeug und Werkzeugaufnahme ausbildenden, Komplettwerkzeugen, mit einer fahrbaren Untergestelleinheit (16) und mit einer auf der fahrbaren Untergestelleinheit (16) angeordneten Aufbewahrungseinheit (18) zu einer Lagerung der Werkzeugaufnahmen (14) und/oder der Komplettwerkzeuge, wobei die Aufbewahrungseinheit (18) zumindest eine Halteeinrichtung (20) umfasst, welche zu einer relativ zu einer parallel zu einer Vertikalrichtung verlaufenden Aufstellrichtung (22) der Aufbewahrungseinheit (18) schräglagigen Halterung der Werkzeugaufnahmen (14) und/oder der Komplettwerkzeuge vorgesehen ist, wobei die Halteeinrichtung (20) eine Mehrzahl an zumindest im Wesentlichen identisch zueinander ausgebildeten Halteplätzen (24, 26, 142) aufweist, wobei die Halteeinrichtung (20) zur Ausbildung der Halteplätze (24, 26, 142) rechenartig ausgebildete und waagrecht in einem von der Aufbewahrungseinheit (18) ausgebildeten Aufnahmeraum (140) positionierte Halteschienen (144, 146) aufweist, und wobei mehrere Halteschienen (144, 146) in dem Aufnahmeraum (140) übereinander angeordnet sind, **dadurch gekennzeichnet, dass** benachbarte Halteschienen (144, 146) innerhalb des Aufnahmeraums (140) in einer Tiefenrichtung (76) der Aufbewahrungseinheit (18) zueinander versetzt angeordnet sind.

2. Bestückungsvorrichtung (46) nach Anspruch 1, **dadurch gekennzeichnet, dass** die Halteeinrichtung (20) zumindest einen Halteplatz (24, 26, 142) umfasst, welcher derart ausgebildet ist, dass eine Unterseite (28) einer in die Halteeinrichtung (20) eingelegten Werkzeugaufnahme (14) und/oder eines in die Halteeinrichtung (20) eingelegten Komplettwerkzeugs, zumindest teilweise in Richtung einer zumindest teilweise seitlich an der Aufbewahrungseinheit (18) angeordneten Be- und/oder Entladeöffnung (30) der Aufbewahrungseinheit (18) zeigt.

3. Bestückungsvorrichtung (46) nach Anspruch 2, **dadurch gekennzeichnet, dass** die Halteplätze (24, 26, 142) zumindest im Wesentlichen horizontal nebeneinander angeordnet sind.

4. Bestückungsvorrichtung (46) nach einem der vorhergehenden Ansprüche, **dadurch gekennzeichnet, dass** die Aufbewahrungseinheit (18) zumindest eine weitere Halteeinrichtung (32) zumindest zu einer aufrechten Halterung von, insbesondere mit den in der Halteeinrichtung (20) gehalterten Werkzeugaufnahmen (14) kombinierbaren, Werkzeugen (34) umfasst.

5. Bestückungsvorrichtung (46) nach Anspruch 4, **dadurch gekennzeichnet, dass** die weitere Halteeinrichtung (32) zumindest einen Halteplatz (36) umfasst, welcher in der Aufstellrichtung (22) oberhalb des Halteplatzes (24, 26, 142) der Halteeinrichtung (20) angeordnet ist.

6. Bestückungsvorrichtung (46) nach Anspruch 5, **dadurch gekennzeichnet, dass** der zumindest eine Halteplatz (36) der weiteren Halteeinrichtung (32) eine universell bestückbare Werkzeug-Schnapphalterung (38) aufweist.

7. Bestückungsvorrichtung (46) nach Anspruch 6, **dadurch gekennzeichnet, dass** die Werkzeug-Schnapphalterung (38) einen Spannmechanismus (40) zu einer Fixierung des Werkzeugs (34) in dem Halteplatz (36) der weiteren Halteeinrichtung (32) aufweist, welcher durch eine Bewegung eines Roboterarms (42) des Handhabungsroboters (10) entlang einer Bewegungsbahn bedienbar ist.

8. Bestückungsvorrichtung (46) nach einem der vorhergehenden Ansprüche, **dadurch gekennzeichnet, dass** die Aufbewahrungseinheit (18) zusätzlich zu einer primären Be- und/oder Entladeöffnung (30) zumindest eine manuell öffen- und schließbare sekundäre Be- und/oder Entladeöffnung (60) aufweist.

9. Bestückungsvorrichtung (46) nach einem der vorhergehenden Ansprüche, **dadurch gekennzeichnet, dass** die fahrbare Untergestelleinheit (16) eine Kopplungseinrichtung (64) zu einer Kopplung mit einer angetriebenen, vorzugsweise autonom fahrenden, Transporteinrichtung (66) aufweist.

10. Bestückungsvorrichtung (46) nach Anspruch 9, **dadurch gekennzeichnet, dass** relativ zu der Aufstellrichtung (22) gesehen, zumindest ein Großteil der Kopplungseinrichtung (64) auf einer Unterseite (68) der fahrbaren Untergestelleinheit (16) angeordnet ist.

11. Bestückungssystem (70) mit einer Bestückungsvorrichtung (46) nach einem der vorhergehenden Ansprüche und mit zumindest einer in der Bestückungsvorrichtung (46) angeordneten Werkzeugaufnahme (14), mit zumindest einem in der Bestückungsvorrichtung (46) angeordneten Komplettwerkzeug und/oder mit zumindest einem in der Bestückungsvorrichtung (46) angeordneten Werkzeug (34).

12. Transportsystem (72) mit einer Bestückungsvorrichtung (46) nach einem der Ansprüche 1 bis 10, insbesondere mit einem Bestückungssystem (70) nach Anspruch 11, und mit einer mit der Bestückungsvorrichtung (46) betriebsmäßig koppelbaren und von der Bestückungsvorrichtung (46) betriebsmäßig trennbaren autonomen oder ferngesteuerten Transporteinrichtung (66).

13. Verfahren zu einer Bestückung einer Anlage (12), insbesondere einer Multispann- und Mess- und/oder Einstellstation (102) und/oder einer Werkzeugmaschine, mittels der Bestückungsvorrichtung (46) nach einem der Ansprüche 1 bis 10, insbesondere mittels dem Bestückungssystem (70) nach Anspruch 11.

14. Verfahren nach Anspruch 13, **dadurch gekennzeichnet, dass** in zumindest einem Andockschritt (84) eine Verbindung zwischen Schnittstellen (54) der Bestückungsvorrichtung (46) und der Anlage (12) hergestellt wird und dass in einem auf den Andockschritt (84) folgenden Öffnungsschritt (88) eine Öffnung einer eine Be- und/oder Entladeöffnung (30) der Bestückungsvorrichtung (46) verschließenden Verschlusseinheit (56) über die verbundenen Schnittstellen (54) gesteuert wird und/oder über die verbundenen Schnittstellen (54) mit Antriebsenergie versorgt wird.

15. Verfahren nach Anspruch 13 oder 14, **dadurch gekennzeichnet, dass** in zumindest einem vor einer ersten Entnahme einer Werkzeugaufnahme (14) aus der Bestückungsvorrichtung (46) durchgeführten Erkennungsschritt (90) von einem Sensor (92) der Anlage (12) alle in der Bestückungsvorrichtung (46) angeordneten Werkzeugaufnahmen (14) identifiziert werden und vorzugsweise deren Position registriert wird.

16. Verfahren nach Anspruch 15, **dadurch gekennzeichnet, dass** die Werkzeugaufnahmen (14) in dem Erkennungsschritt (90) unterschiedlichen Werkzeugfuttertyp-Kategorien zugeordnet werden, wobei jede Werkzeugaufnahme (14) anhand der jeweils verwendeten Werkzeugspanntechnik einer der Werkzeugfuttertyp-Kategorien zugeordnet wird und wobei in Zuführungsschritten (94, 96) die kategorisierten Werkzeugaufnahmen (14) von dem Handhabungsroboter (10) jeweils in eine passende Werkzeugspannstation (98) einer Mehrzahl an Werkzeugspannstationen der Multispann- und Mess- und/oder Einstellstation (102) eingesetzt werden oder wobei in alternativen Zuführungsschritten (104, 106) die kategorisierten Werkzeugaufnahmen (14) von dem Handhabungsroboter (10) jeweils in einen passenden Werkzeugplatz einer Mehrzahl an Werkzeugplätzen der Werkzeugmaschine eingesetzt werden.

17. Verfahren nach einem der Ansprüche 13 bis 16, **dadurch gekennzeichnet, dass** in zumindest einem Bestückungsschritt (108) eine schräglagig in der Aufbewahrungseinheit (18) gelagerte Werkzeugaufnahme (14) und/oder ein schräglagig in der Aufbewahrungseinheit (18) gelagertes Komplettwerkzeug von einem Handhabungsroboter (10) der Anlage (12) an einer Unterseite (28) der Werkzeugaufnahme (14) und/oder des Komplettwerkzeugs gegriffen und aus der Bestückungsvorrichtung (46) entnommen wird.

## Claims

1. A loading device (46) for a loading of an installation (12), in particular of a multi-clamping and measuring and/or presetting station (102) for tools (34) and/or for tool holders (14), and/or a machine tool, which in particular includes at least one handling robot (10), at least with tool holders (14) and/or tool assemblies forming fixed combinations of tool and tool holder, the loading device (46) comprising a rollable undercarriage unit (16) and comprising a storage unit (18), arranged on the rollable undercarriage unit (16), for a storage of the tool holders (14) and/or the tool assemblies, wherein the storage unit (18) comprises at least one holding device (20), which is configured for an oblique-positioned holding of the tool holders (14) and/or of the tool assemblies relative to a put-up direction (22) of the storage unit (18), which runs parallel to a vertical direction, wherein the holding device (20) comprises a plurality of holding places (24, 26, 142), which are implemented at least substantially identically to one another, wherein in order to form the holding places (24, 26, 142) the holding device (20) comprises holding rails (144, 146), which are implemented in a rake-like manner and are positioned horizontally in a receiving space (140), and wherein several holding rails (144, 146) are arranged above one another in the receiving space (140), **characterized in that,** within the receiving space (140), neighboring holding rails (144, 146) are arranged offset from each other in a depth direction (76) of the storage unit (18).

2. The loading device (46) according to claim 1, **characterized in that** the holding device (20) comprises at least one holding place (24, 26, 142), which is implemented in such a way that an underside (28) of a tool holder (14) laid into the holding device (20) and/or of a tool assembly laid into the holding device (20) points at least partly toward a loading and/or unloading opening (30) of the storage unit (18), which is arranged at least partly sidewise on the storage unit (18).

3. The loading device (46) according to claim 2, **characterized in that** the holding places (24, 26, 142) are arranged at least substantially next to each other horizontally.

4. The loading device (46) according to one of the preceding claims, **characterized in that** the storage unit (18) comprises at least one further holding device (32) at least for an upright holding of tools (34), which can in particular be combined with the tools holders (14) held in the holding device (20).

5. The loading device (46) according to claim 4, **characterized in that** the further holding device (32) comprises at least one holding place (36), which is arranged in the put-up direction (22) above the holding place (24, 26, 142) of the holding device (20).

6. The loading device (46) according to claim 5, **characterized in that** the at least one holding place (36) of the further holding device (32) comprises a universally loadable tool snap-holder (38).

7. The loading device (46) according to claim 6, **characterized in that** the tool snap-holder (38) comprises a clamping mechanism (40) for a fixation of the tool (34) in the holding place (36) of the further holding device (32), which can be operated via a movement of a robot arm (42) of the handling robot (10) along a movement path.

8. The loading device (46) according to one of the preceding claims, **characterized in that** the storage unit (18) comprises, in addition to a primary loading and/or unloading opening (30), at least one manually openable and closable secondary loading and/or unloading opening (60).

9. The loading device (46) according to one of the preceding claims, **characterized in that** the rollable undercarriage unit (16) comprises a coupling apparatus (64) for a coupling with a driven, preferably autonomously driving, transport device (66).

10. The loading device (46) according to claim 9, **characterized in that** viewed relative to the put-up direction (22), at least a large portion of the coupling apparatus (64) is arranged on an underside (68) of the rollable undercarriage unit (16).

11. A loading system (70) with a loading device (46) according to one of the preceding claims and with at least one tool holder (14), which is arranged in the loading device (46), comprising at least one tool assembly, which is arranged in the loading device (46), and/or at least one tool (34), which is arranged in the loading device (46).

12. A transport system (72) with a loading device (46) according to one of claims 1 to 10, in particular with a loading system (70) according to claim 11, and with an autonomous or remote-controlled transport device (66) which is operatively couplable with the loading device (46) and is operatively separable from the loading device (46).

13. A method for loading an installation (12), in particular a multi-clamping and measuring and/or presetting station (102) and/or a machine tool, by means of the loading device (46) according to one of claims 1 to 10, in particular by means of the loading system (70) according to claim 11.

14. The method according to claim 13, **characterized in that** in at least one docking step (84) a connection is established between interfaces (54) of the loading device (46) and interfaces of the installation (12) and, in an opening step (88) following the docking step (84), an opening of a closure unit (56) closing the loading and/or unloading opening (30) of the loading device (46) is controlled via the connected interfaces (54) and/or is supplied with drive energy via the connected interfaces (54).

15. The method according to claim 13 or 14, **characterized in that** in at least one identification step (90) carried out before a first removal of a tool holder (14) out of the loading device (46), all tool holders (14) arranged in the loading device (46) are identified by a sensor (92) of the installation (12), and preferably their position is registered.

16. The method according to claim 15, **characterized in that** the tool holders (14) are allocated to different tool-chuck type categories in the identification step (90), wherein each tool holder (14) is allocated to one of the tool-chuck type categories on the basis of the respectively used tool-clamping technology, and wherein in feeding steps (94, 96) the categorized tool holders (14) are in each case inserted by the handling robot (10) into a suitable tool-clamping station (98) of a plurality of tool-clamping stations of the multi-clamping and measuring and/or presetting station (102), or wherein in alternative feeding steps (104, 106) the categorized tool holders (14) are in each case inserted by the handling robot (10) into a suitable tool place of a plurality of tool places of the machine tool.

17. The method according to one of claims 13 to 16, **characterized in that** in at least one loading step (108) a tool holder (14) supported in the storage unit (18) in an oblique position and/or a tool assembly supported in the storage unit (18) in an oblique position is gripped by a handling robot (10) of the installation (12) on an underside (28) of the tool holder (14) and/or of the tool assembly and is removed out of the loading device (46).

## Revendications

1. Dispositif de chargement (46) pour un chargement d'une installation (12), en particulier d'une station de serrage multiple et de mesure et/ou de préréglage (102) pour des outils (34) et/ou des logements d'outil (14) et/ou d'une machine-outil, comprenant en particulier au moins un robot de manipulation (10), au moins avec des logements d'outil (14) et/ou avec des outils complets formant des combinaisons fixes d'outil et de logement d'outil, le dispositif de chargement (46) comprenant une unité de châssis mobile (16) et une unité de stockage (18) disposée sur l'unité de châssis mobile (16) pour un stockage des logements d'outil (14) et/ou des outils complets, où l'unité de stockage (18) comprend au moins un dispositif de maintien (20) qui est prévu pour un maintien en couches obliques des logements d'outil (14) et/ou des outils complets par rapport à une direction de pose (22) de l'unité de stockage (18) s'étendant parallèlement à une direction verticale, où le dispositif de maintien (20) présente une pluralité d'emplacements de maintien (24, 26, 142) réalisés au moins sensiblement identiques les uns aux autres, où le dispositif de maintien (20) présente des rails de maintien (144, 146) réalisés à la manière de râteaux pour former les emplacements de maintien (24, 26, 142) et positionnés horizontalement dans un espace de réception (140) réalisé par l'unité de stockage (18), et où plusieurs rails de maintien (144, 146) sont disposés les uns au-dessus des autres dans l'espace de réception (140), **caractérisé en ce que** des rails de maintien (144, 146) adjacents sont disposés à l'intérieur de l'espace de réception (140) de manière décalée les uns par rapport aux autres dans une direction de profondeur (76) de l'unité de stockage (18).

2. Dispositif de chargement (46) selon la revendication 1, **caractérisé en ce que** le dispositif de maintien (20) comprend au moins un emplacement de maintien (24, 26, 142) qui est réalisé de telle sorte qu'un côté inférieur (28) d'un logement d'outil (14) inséré dans le dispositif de maintien (20) et/ou d'un outil complet inséré dans le dispositif de maintien (20) est orienté au moins partiellement dans la direction d'une ouverture de chargement et/ou de déchargement (30) de l'unité de stockage (18) disposée au moins partiellement latéralement sur l'unité de stockage (18).

3. Dispositif de chargement (46) selon la revendication 2, **caractérisé en ce que** les emplacements de maintien (24, 26, 142) sont disposés les uns à côté des autres au moins sensiblement horizontalement.

4. Dispositif de chargement (46) selon l'une quelconque des revendications précédentes, **caractérisé en ce que** l'unité de stockage (18) comprend au moins un autre dispositif de maintien (32) au moins pour un maintien vertical d'outils (34), en particulier pouvant être combinés avec les logements d'outil (14) maintenus dans le dispositif de maintien (20).

5. Dispositif de chargement (46) selon la revendication 4, **caractérisé en ce que** l'autre dispositif de maintien (32) comprend au moins un emplacement de maintien (36) qui est disposé dans la direction de pose (22) au-dessus de l'emplacement de maintien (24, 26, 142) du dispositif de maintien (20).

6. Dispositif de chargement (46) selon la revendication 5, **caractérisé en ce que** l'au moins un emplacement de maintien (36) de l'autre dispositif de maintien (32) présente un support à encliquetage d'outil (38) pouvant être chargé de manière universelle.

7. Dispositif de chargement (46) selon la revendication 6, **caractérisé en ce que** le support à encliquetage d'outil (38) présente un mécanisme de serrage (40) pour une fixation de l'outil (34) dans l'emplacement de maintien (36) de l'autre dispositif de maintien (32), qui peut être actionné par un mouvement d'un bras de robot (42) du robot de manipulation (10) le long d'une trajectoire de mouvement.

8. Dispositif de chargement (46) selon l'une quelconque des revendications précédentes, **caractérisé en ce que** l'unité de stockage (18) présente, en plus d'une ouverture de chargement et/ou de déchargement primaire (30), au moins une ouverture de chargement et/ou de déchargement secondaire (60) pouvant être ouverte et fermée manuellement.

9. Dispositif de chargement (46) selon l'une quelconque des revendications précédentes, **caractérisé en ce que** l'unité de châssis mobile (16) présente un dispositif de couplage (64) pour un couplage avec un dispositif de transport (66) entraîné, de préférence se déplaçant de manière autonome.

10. Dispositif de chargement (46) selon la revendication 9, **caractérisé en ce que,** vu par rapport à la direction de pose (22), au moins une grande partie du dispositif de couplage (64) est disposée sur un côté inférieur (68) de l'unité de châssis mobile (16).

11. Système de chargement (70) comprenant un dispositif de chargement (46) selon l'une quelconque des revendications précédentes et comprenant au moins un logement d'outil (14) disposé dans le dispositif de chargement (46), comprenant au moins un outil complet disposé dans le dispositif de chargement (46) et/ou comprenant au moins un outil (34) disposé dans le dispositif de chargement (46).

12. Système de transport (72) comprenant un dispositif de chargement (46) selon l'une quelconque des revendications 1 à 10, en particulier comprenant un système de chargement (70) selon la revendication 11, et comprenant un dispositif de transport (66) autonome ou commandé à distance pouvant être couplé en fonctionnement au dispositif de chargement (46) et pouvant être séparé en fonctionnement du dispositif de chargement (46).

13. Procédé de chargement d'une installation (12), en particulier d'une station de serrage multiple et de mesure et/ou de préréglage (102) et/ou d'une machine-outil, au moyen du dispositif de chargement (46) selon l'une quelconque des revendications 1 à 10, en particulier au moyen du système de chargement (70) selon la revendication 11.

14. Procédé selon la revendication 13, **caractérisé en ce que,** dans au moins une étape d'amarrage (84), une liaison entre des interfaces (54) du dispositif de chargement (46) et de l'installation (12) est établie et **en ce que**, dans une étape d'ouverture (88) suivant l'étape d'amarrage (84), une ouverture d'une unité de fermeture (56) fermant une ouverture de chargement et/ou de déchargement (30) du dispositif de chargement (46) est commandée par le biais des interfaces (54) reliées et/ou est alimentée en énergie d'entraînement par le biais des interfaces (54) reliées.

15. Procédé selon la revendication 13 ou 14, **caractérisé en ce que,** dans au moins une étape de reconnaissance (90) réalisée avant un premier retrait d'un logement d'outil (14) hors du dispositif de chargement (46), tous les logements d'outil (14) disposés dans le dispositif de chargement (46) sont identifiés par un capteur (92) de l'installation (12) et leur position est de préférence enregistrée.

16. Procédé selon la revendication 15, **caractérisé en ce que** les logements d'outil (14) sont, dans l'étape de reconnaissance (90), associés à différentes catégories de type de mandrin d'outil, chaque logement d'outil (14) étant, à l'aide de la technique de serrage d'outil respectivement utilisée, associé à l'une des catégories de type de mandrin d'outil et, dans des étapes d'amenée (94, 96), les logements d'outil (14) catégorisés étant insérés par le robot de manipulation (10) respectivement dans une station de serrage d'outil (98) correspondante d'une pluralité de stations de serrage d'outil de la station de serrage multiple et de mesure et/ou de préréglage (102) ou, dans des étapes d'amenée (104, 106) alternatives, les logements d'outil (14) catégorisés étant insérés par le robot de manipulation (10) respectivement dans un emplacement d'outil correspondant d'une pluralité d'emplacements d'outil de la machine-outil.

17. Procédé selon l'une quelconque des revendications 13 à 16, **caractérisé en ce que,** dans au moins une étape de chargement (108), un logement d'outil (14) monté en couche oblique dans l'unité de stockage (18) et/ou un outil complet monté en couche oblique dans l'unité de stockage (18) est saisi par un robot de manipulation (10) de l'installation (12) au niveau d'un côté inférieur (28) du logement d'outil (14) et/ou de l'outil complet et est retiré du dispositif de chargement (46).
